# EUROPEAN PATENT APPLICATION

(11) **EP 4 844 647 A1**
(43) Date of publication of application: **25.11.2026**
(21) Application number: 26178633.9
(22) Date of filing: 13.05.2026
(51) Int. Cl.: G06Q 10/06, G06Q 10/10, G06F 16/25, G06F 8/70

(54) **AGGREGATING DATA TO REPRESENT RELATIONSHIPS BETWEEN AUTONOMOUS CONSTRUCTS**

(30) Priority: 21.05.2025 US 202563809957 P
(71) Applicant: United Parcel Service Of America, Inc., Atlanta, GA 30328 (US)
(72) Inventor: PODDET, Amit, Atlanta, GA (US)
(74) Representative: Zacco Sweden AB

(57) **Abstract**

In general, various embodiments of the present disclosure provide systems, methods, apparatuses, and technologies, and/or the like for facilitating aggregating data to represent relationships between autonomous constructs found in agile project management digital platforms. In addition, various embodiments of the present disclosure provide systems, methods, apparatuses, and technologies, and/or the like for enabling agile project management digital platforms to account for custom organizational constructs that do not necessarily align with organizational constructs found in conventional agile project management platforms.

## Description

### CROSS REFERENCE TO RELATED APPLICATIONS

This application claims priority from U.S. Provisional Patent Application Ser. No. 63/809,957, filed May 21, 2025, the disclosure of which is hereby incorporated herein by reference in its entirety.

### BACKGROUND

Many software design teams have embraced the agile project management philosophy in developing software solutions. Agile project management is an incremental and non-linear approach to managing the development of a software solution that focuses on breaking down projects for developing the software solution into more manageable tasks to be completed in short iterations known as sprints throughout the project life cycle. A core advantage of agile project management is that it empowers teams to work independently and self-organize in completing their assigned tasks.

Software design teams who work under the agile framework will often use some type of digital platform designed to facilitate the implementation of agile methodologies in project management. For example, these digital platforms may provide features for planning, tracking, and managing projects in an iterative and flexible manner, while enabling teams to adapt to changing requirements and deliver value incrementally. In addition, many of these digital platforms are designed to promote agile methodologies by implementing organizational frameworks that include constructs that are self-contained and autonomous within the platforms. For example, many digital platforms are configured to silo individual projects into containers/instances that are independent from each other so that the tasks needed to be completed for each of the projects can be worked on without interfering with any of the tasks needed to be completed for the other projects.

However, projects are often not independent of each other. For example, an entity, such as a company, may be developing a software solution that includes different software products that make up the solution. Each of the different products may involve completing one or more projects to build out the product for the software solution. The company may be interested in monitoring and/or tracking the overall progress on completing the software solution, as well as the different software products that make up the solution. However, since the framework of many agile project management digital platforms are designed such that each of the projects operates as an autonomous construct within the platform, using the digital platform to conduct any type of aggregate analysis on the different projects that are being performed to build out the products can be very difficult since the digital platform does not provide aggregate data representing the relationships between the projects to draw upon in conducting the analysis.

Further, the company may need to institute a framework for implementing agile methodologies into project management that does not necessarily align with conventional organizational constructs used for agile project management. For example, the company may work with vendors who provide teams who participate in the projects for building out one or more of the products for the software solution. Therefore, the company may need to institute a custom organizational construct within the agile project management framework that accounts for the vendors. However, many agile product management digital platforms only account for organizational constructs found in conventional frameworks.

For example, the platform organizational framework for an agile project management platform may only provide for a single organizational construct for representing an entity (e.g., a "team") on the platform who is participating in projects. Therefore, the digital platform does not provide the company with an organizational framework that provides for multiple constructs to account for multiple entities on the platform who are participating in projects such as the teams, themselves, as well as the vendors who are providing the teams. As a result, a disconnect exists between the data available through the digital platform and the data needed to be drawn upon in conducting the analysis to monitor and/or track the overall progress of vendors and their teams on completing the products for the software solution.

Accordingly, a need exists in the relevant technology to facilitate providing aggregate data to represent relationships between autonomous constructs defined within agile project management digital platforms. In addition, a need exists in the relevant technology to enable agile project management digital platforms to account for custom organizational constructs that do not necessarily align with organizational constructs found in conventional agile project management platforms.

### SUMMARY

This summary is intended to introduce a selection of concepts in a simplified form that is further described below in the detailed description section of this disclosure. This summary is not intended to identify key or essential features of the claimed subject matter, nor is it intended to be used as an aid in isolation to determine the scope of the claimed subject matter.

In general, various embodiments of the present disclosure provide methods, apparatuses, systems, computing devices, computing entities, and/or the like for facilitating aggregating data to represent relationships between autonomous constructs found in agile project management digital platforms. In addition, various embodiments of the present disclosure provide methods, apparatuses, systems, computing devices, computing entities, and/or the like for enabling agile project management digital platforms to account for custom organizational constructs that do not necessarily align with organizational constructs found in conventional agile project management platforms.

Various aspects of the disclosure provide a method that comprises: retrieving, by computing hardware and via a first data movement activity defined in a first data pipeline, first iteration data for a first project defined for an organization using an agile project management digital platform, wherein: the organization represents an entity, the first project involves developing a software solution for the entity, the first project is stored as a first instance on the agile project management digital platform, the first data pipeline is configured to communicate with the first instance, and the first iteration data relates to a first iteration performed by a first team for the first project; processing, by the computing hardware via a first data transformation activity defined in the first data pipeline, the first iteration data to at least one of insert or update a first import record in an import table, wherein the first import record comprises a set of import fields comprising first import values based at least in part on the first iteration data; retrieving, by the computing hardware and via a second data movement activity defined in a second data pipeline, second iteration data for a second project defined for the organization, wherein: the second project is involved in developing the software solution for the entity, the second project is stored as a second instance on the agile project management digital platform, the second data pipeline is configured to communicate with the second instance, and the second iteration data relates to a second iteration performed by a second team for the second project; processing, by the computing hardware via a second data transformation activity defined in the second data pipeline, the second iteration data to at least one of insert or update a second import record in the import table, wherein the second import record comprises the set of import fields comprising second import values based at least in part on the second iteration data; processing, by the computing hardware, the first import values found in the set of import fields for the first import record to at least one of insert or update a first iteration record in an iteration table of a centralized data repository, wherein the first iteration record comprises a set of iteration fields comprising first iteration values based at least in part on the first import values and a data structure of the centralized data repository is configured based at least in part on an organizational framework comprising a custom construct defined by the entity for conducting agile project management methodologies in developing the software solution; and processing, by the computing hardware, the second import values found in the set of import fields for the second import record to at least one of insert or update a second iteration record in the iteration table of the centralized data repository, wherein the second iteration record comprises the set of iteration fields comprising second iteration values based at least in part on the second import values.

In some aspects, the custom construct comprises an entity construct identifying a separate entity associated with at least one of the first team or the second team. Here, for example, the centralized data repository may comprise a team configuration table, the team configuration table may comprise a first team record for the first team that comprises a field storing a first separate entity identifier for the separate entity associated with the first team, and the team configuration table may comprise a second team record for the second team that comprises the field storing a second separate entity identifier for the separate entity associated with the second team. In some embodiments, the method may further comprise processing, by the computing hardware, the first iteration record, the first team record, the second iteration record, and the second team record to generate a comparison analysis between the separate entity associated with the first team and the separate entity associated with the second team.

In other aspects, the software solution comprises a first product being developed via the first project and a second product being developed via the second project, and the custom construct comprises a solution construct used in identifying the software solution. Here, for example, the centralized data repository may comprise a solution to product table and a product to project table, the solution to product table may comprise a first solution to product record that comprises a first field storing a solution identifier for the software solution and a second field storing a first product identifier for the first product and a second solution to product record that comprises the first field storing the solution identifier and the second field storing a second product identifier for the second product, and the product to project table may comprise a first product to project record that comprises a third field storing the first product identifier and a fourth field storing a first project identifier for the first project and a second product to project record that comprises the third field storing the second product identifier and the fourth field storing a second project identifier for the second project. In some embodiments, the method may further comprise processing, by the computing hardware, the first iteration record, the first solution to product record, the first product to project record, the second iteration record, the second solution to product record, and the second product to project record to generate a comparison analysis between the first product being developed for the software solution via the first project and the second product being developed for the software solution via the second project.

Various aspects of the disclosure provide a system comprising a computer-readable medium storing instructions and a processing device communicatively coupled to the computer-readable medium, wherein the processing device is configured to execute the instructions and thereby perform operations comprising: retrieving, via a first data pipeline, first iteration data for a first project defined for an organization using an agile project management digital platform, wherein: the organization represents an entity, the first project involves developing a software solution for the entity, the first project is stored as a first instance on the agile project management digital platform, the first data pipeline is configured to communicate with the first instance, and the first iteration data relates to a first iteration performed by a first team for the first project; processing the first iteration data to at least one of insert or update a first import record in an import table, wherein the first import record comprises a set of import fields comprising first import values based at least in part on the first iteration data; retrieving, via a second data pipeline, second iteration data for a second project defined for the organization, wherein: the second project is involved in developing the software solution for the entity, the second project is stored as a second instance on the agile project management digital platform, the second data pipeline is configured to communicate with the second instance, and the second iteration data relates to a second iteration performed by a second team for the second project; processing the second iteration data to at least one of insert or update a second import record in the import table, wherein the second import record comprises the set of import fields comprising second import values based at least in part on the second iteration data; processing the first import values found in the set of import fields for the first import record to at least one of insert or update a first iteration record in an iteration table of a centralized data repository, wherein the first iteration record comprises a set of iteration fields comprising first iteration values based at least in part on the first import values and a data structure of the centralized data repository is configured based at least in part on an organizational framework comprising a custom construct defined by the entity for conducting agile project management methodologies in developing the software solution; and processing the second import values found in the set of import fields for the second import record to at least one of insert or update a second iteration record in the iteration table of the centralized data repository, wherein the second iteration record comprises the set of iteration fields comprising second iteration values based at least in part on the second import values.

In some aspects, the custom construct comprises an entity construct identifying a separate entity associated with at least one of the first team or the second team. Here, the centralized data repository may comprise a team configuration table, the team configuration table may comprise a first team record for the first team that comprises a field storing a first separate entity identifier for the separate entity associated with the first team, and the team configuration table may comprise a second team record for the second team that comprises the field storing a second separate entity identifier for the separate entity associated with the second team. In some embodiments, the operations may further comprise processing the first iteration record, the first team record, the second iteration record, and the second team record to generate a comparison analysis between the separate entity associated with the first team and the separate entity associated with the second team.

In other aspects, the software solution comprises a first product being developed via the first project and a second product being developed via the second project, and the custom construct comprises a solution construct used in identifying the software solution. Here, the centralized data repository may comprise a solution to product table and a product to project table, the solution to product table may comprise a first solution to product record that comprises a first field storing a solution identifier for the software solution and a second field storing a first product identifier for the first product and a second solution to product record that comprises the first field storing the solution identifier and the second field storing a second product identifier for the second product, and the product to project table may comprise a first product to project record that comprises a third field storing the first product identifier and a fourth field storing a first project identifier for the first project and a second product to project record that comprises the third field storing the second product identifier and the fourth field storing a second project identifier for the second project. In some embodiments, the operations may further comprise processing the first iteration record, the first solution to product record, the first product to project record, the second iteration record, the second solution to product record, and the second product to project record to generate a comparison analysis between the first product being developed for the software solution via the first project and the second product being developed for the software solution via the second project.

Various aspects of the disclosure provide a computer-readable medium storing computer-executable instructions that, when executed by computing hardware, configure the computing hardware to perform operations comprising: retrieving, via a first data pipeline, first iteration data for a first project defined for an organization using an agile project management digital platform, wherein: the organization represents an entity, the first project involves developing a software solution for the entity, the first project is stored as a first instance on the agile project management digital platform, the first data pipeline is configured to communicate with the first instance, and the first iteration data relates to a first iteration performed by a first team for the first project; processing the first iteration data to at least one of insert or update a first import record in an import table, wherein the first import record comprises a set of import fields comprising first import values based at least in part on the first iteration data; retrieving, via a second data pipeline, second iteration data for a second project defined for the organization, wherein: the second project is involved in developing the software solution for the entity, the second project is stored as a second instance on the agile project management digital platform, the second data pipeline is configured to communicate with the second instance, and the second iteration data relates to a second iteration performed by a second team for the second project; processing the second iteration data to at least one of insert or update a second import record in the import table, wherein the second import record comprises the set of import fields comprising second import values based at least in part on the second iteration data; processing the first import values found in the set of import fields for the first import record to at least one of insert or update a first iteration record in an iteration table of a centralized data repository, wherein the first iteration record comprises a set of iteration fields comprising first iteration values based at least in part on the first import values and a data structure of the centralized data repository is configured based at least in part on an organizational framework comprising a custom construct defined by the entity for conducting agile project management methodologies in developing the software solution; and processing the second import values found in the set of import fields for the second import record to at least one of insert or update a second iteration record in the iteration table of the centralized data repository, wherein the second iteration record comprises the set of iteration fields comprising second iteration values based at least in part on the second import values.

In some aspects, the custom construct comprises an entity construct identifying a separate entity associated with at least one of the first team or the second team. Here, the data structure may comprise a team configuration table, the team configuration table may comprise a first team record for the first team that comprises a field storing a first separate entity identifier for the separate entity associated with the first team, and the team configuration table may comprise a second team record for the second team that comprises the field storing a second separate entity identifier for the separate entity associated with the second team. In some embodiments, the operations may further comprise processing the first iteration record, the first team record, the second iteration record, and the second team record to generate a comparison analysis between the separate entity associated with the first team and the separate entity associated with the second team.

In other aspects, the software solution comprises a first product being developed via the first project and a second product being developed via the second project, and the custom construct comprises a solution construct used in identifying the software solution. Here, the centralized data repository may comprise a solution to product table and a product to project table, the solution to product table may comprise a first solution to product record that comprises a first field storing a solution identifier for the software solution and a second field storing a first product identifier for the first product and a second solution to product record that comprises the first field storing the solution identifier and the second field storing a second product identifier for the second product, and the product to project table may comprise a first product to project record that comprises a third field storing the first product identifier and a fourth field storing a first project identifier for the first project and a second product to project record that comprises the third field storing the second product identifier and the fourth field storing a second project identifier for the second project. In some embodiments, the operations may further comprise processing the first iteration record, the first solution to product record, the first product to project record, the second iteration record, the second solution to product record, and the second product to project record to generate a comparison analysis between the first product being developed for the software solution via the first project and the second product being developed for the software solution via the second project.

### BRIEF DESCRIPTION OF THE DRAWINGS

The present systems, methods, and apparatuses for are described in detail in connection with the attached drawing figures, which illustrate non-limiting examples of the disclosed subject matter, wherein:
FIG. 1 depicts an example mapping of an entity's desired organizational framework for using agile project management methodologies to an organizational framework found in conventional agile project management digital platforms;
FIG. 2 depicts an example configuration of projects found in environment of an agile project management digital platform for an organization;
FIG. 3 depicts an example configuration of an organization environment of an agile project management digital platform in accordance with various embodiments of the present disclosure;
FIG. 4 depicts an example process for loading iteration records into a centralized data repository in accordance with various embodiments of the present disclosure;
FIG. 5 depicts an example of a data structure of a centralized data repository in accordance with various embodiments of the present disclosure;
FIG. 6 depicts an example computing architecture that may be used in accordance with various embodiments of the present disclosure; and
FIG. 7 depicts an example of computing hardware suitable for supporting the operation of various embodiments of the present disclosure.

### DETAILED DESCRIPTION

Various aspects for practicing the technologies disclosed herein are described more fully hereinafter with reference to the accompanying drawings, in which some, but not all aspects of the technologies disclosed are shown. Indeed, the aspects disclosed herein are provided so that this disclosure will satisfy applicable legal requirements and should not be construed as limiting or precluding other aspects applying the teachings and concepts disclosed herein. Like numbers in the drawings refer to like elements throughout.

### Overview

As previously noted, many software design teams have embraced the agile project management philosophy in developing software solutions. Agile project management is an incremental and non-linear approach to managing the development of a software solution that focuses on breaking down projects for developing the software solution into more manageable tasks to be completed in short iterations known as sprints throughout the project life cycle. A core advantage of agile project management is that it empowers teams to work independently and self-organize in completing their assigned tasks.

Software design teams who work under the agile framework will often use some type of digital platform designed to facilitate the implementation of agile methodologies in project management. For example, a commonly used agile project management digital platform is Azure^{®} DevOps. Azure^{®} DevOps is a cloud-based or on-premises platform from Microsoft^{®} that provides a suite of tools and services to help software development teams plan, collaborate, and deliver products faster and more efficiently, encompassing the entire software development lifecycle. Often, these digital platforms provide features for planning, tracking, and managing projects in an iterative and flexible manner, while enabling teams to adapt to changing requirements and deliver value incrementally. In addition, many of these digital platforms are designed to promote agile methodologies by facilitating organizational constructs to operate as self-contained and autonomous objects within the platforms.

For example, many agile project management digital platforms are configured to silo individual organizations into environments so that they can operate independent of environments for other organizations who are also tenants on the platforms. In addition, many agile project management digital platforms are also configured to silo individual projects for an organization into instances (e.g., containers) that are independent from each other. This can allow one or more teams to work on a project using the most appropriate tools and/or resources provided through a digital platform for building out the functionality (e.g., product) associated with the project without concerns over the tools and/or resources being used in building out the functionality (e.g., products) for other projects. In addition, siloing various organizational constructs into instances can allow each construct to be independently managed, developed, etc., resulting in numerous efficiencies in the software solution development process.

The independent, distributed nature of agile project management digital platforms can also create stability and security in the software solution development process. For example, since a digital platform can maintain projects as self-contained and autonomous constructs within the platform, concerns do not exist that any work, testing, deployment, and/or the like performed within a project will potentially interfere with the work, testing, deployment, and/or the like being performed within another project. In addition, access for team members to projects can be independently provided, managed, and maintained to ensure autonomy and security between the projects.

However, technical challenges often arise due to these organizational constructs being independent of each other. For example, an entity, such as a company, may be developing a software solution that involves completing one or more projects to build out the software solution. The entity may be interested in monitoring and/or tracking the overall progress on completing the software solution, as well as comparing the performance on the different projects being carried out to build out the software solution.

Unfortunately, the organizational framework for an agile project management digital platform's treatment of each project as an autonomous construct within the platform can prove restrictive with respect to performing operations for conducting such monitoring and/or tracking. For example, each project (e.g., instance thereof) may include tools to record data on the progress of building out the associated functionality of the software solution for the project. As a specific example, each project may include tools to record data on the success of completing tasks for building out various functionality for the software solution, data on timing of completing the tasks, data on bugs encountered while building out the functionality, and/or the like. Additionally, each project may include tools that can perform analytics and/or reporting on the data to provide insight on the performance of the one or more teams who are participating in the project with respect to delivery, velocity, and/or quality.

However, because the agile project management digital platform maintains each of the projects independently of each other (e.g., siloed into separate containers/instances), the recorded data and any analysis and reporting performed on such data are also independent of each other (e.g., within the separate containers/instances). Therefore, using the digital platform to conduct any type of aggregate analysis on the different projects that are being performed to build out the software solution can be very difficult, if not impossible, since the digital platform does not provide aggregate data representing the relationships between the projects to draw upon in conducting the analysis.

Another technical challenge that is commonly encountered is that typically agile project management digital platforms only account for conventional organizational constructs found in agile project management. Many agile project management digital platforms are built on a framework that centers around a tenant of the platform serving as an "organization" at the highest level in the hierarchy of the framework. The hierarchy is normally structured with "projects" as organizational constructs under the "organization" construct. A project provides a repository for source code, as well as a place where one or more teams can plan, track progress, and collaborate on building a software solution.

A software solution (sometimes referred to as a "product") may involve multiple projects that are used in building out the software solution. Accordingly, some agile project management digital platforms may provide an organizational construct such as a "portfolio" that provides a dashboard view of the projects that are involved in building out the software solution.

In addition, the platform's organizational framework typically defines "teams" as an organizational construct that represents a selected set of members who can be assigned to projects. With teams, an organization can subcategorize work to better focus on all the work the teams perform and track within a project. Each team typically has access to a suite of agile tools and resources to use to work autonomously and collaborate with other teams across the organization. In some instances, each team assigned to a project may be provided a work area that can be used in organizing the work items assigned to the team for the project.

However, an entity operating on the digital platform may have a need for a custom organizational construct that does not necessarily align with conventional organizational constructs found in agile project management. For example, large entities often develop software solutions that can involve a significant number of different features, or "products," that are provided by the software solutions. As a specific example, a corporation may be developing a new website for customers to visit. The website is to be designed to include several different features, or "products," available through the website to customers. The corporation may be planning to build out the different products for the website over an extended period of time, with each of the different products involving multiple projects to build various functionality for the different products. Therefore, the corporation may wish to use an organizational framework that includes a software solution construct representing the website, with product constructs representing the different products that are to be provided through the website, and project constructs representing the projects that are to be performed to build out the functionality for the different products of the website.

In addition, the corporation may be planning to involve different vendors who will participate in the development of the website. For example, the corporation may plan to engage with various vendors who are to provide teams in building out the different products. Accordingly, the corporation may want to manage building out the different products using agile methodologies because a core advantage of using such methodologies is that it empowers the vendors, and their corresponding teams, to work independently and self-organize in developing their assigned products for the website. Therefore, the corporation may also wish to use an organizational framework that includes an entity construct to account for the different vendors who are providing the teams to work on the different products.

Further, the corporation may be interested in using agile methodologies because they can provide an incremental and non-linear approach to managing the development of the website that focuses on breaking down large projects for developing the products of the website into more manageable tasks to be completed in short iterations known as sprints throughout the project life cycle. A sprint involves one or more of the vendor teams who are delegated to complete the tasks assigned to the sprint to fulfill one or more "user stories." A user story is a short, user-centric description of a desired functionality and/or capability of a product. Therefore, the one or more vendor teams involved in a sprint complete the tasks assigned to the sprint to implement the desired functionality and/or capability within a product of the website. At the end of a sprint, a release of the product is provided that includes the functionality and/or capability. Another sprint may then be performed to develop further functionality and/or capabilities for the product. Therefore, sprints can be performed to incrementally add functionality and/or capabilities that contribute to the overall product.

Accordingly, the corporation may be interested in monitoring the performance of the different vendors with respect to their corresponding teams performing the different iterations. However, conventional agile project management digital platforms typically only provide for a single organizational construct for representing an entity (e.g., a "team") who is involved in performing iterations. Conventional digital platforms do not typically provide an organizational framework that provides for multiple constructs to account for multiple entities involved in performing iterations on the platform such as the teams, themselves, as well as the vendors who are providing the teams. Accordingly, conventional agile project management digital platforms simply view teams solely as constructs of the organization, and not also constructs of different vendors. Therefore, any type of monitoring and/or reporting functionality provided through the digital platforms would not account for the vendors, making it difficult to perform any type of comparative analysis on the performance of the vendors and their corresponding teams.

However, various embodiments of the present disclosure address these technical challenges. Specifically, various embodiments of the disclosure do so by providing technologies for centralizing data for different, autonomous organizational constructs maintained in an agile project management digital platform. As a result, the digital platform can provide aggregate data representing relationships between the constructs that can then be drawn upon in conducting an analysis on the constructs such as, for example, conducting a comparative analysis on the performance of the constructs. Additionally, various embodiments of the disclosure provide technologies that allow for an entity to define custom organizational constructs, as well as enabling agile project management digital platforms to account for such custom organizational constructs in providing monitoring and reporting functionality that can be based at least in part on the custom organizational constructs.

In various embodiments, an aggregation process is provided for gathering data from autonomous organizational constructs such as, for example, projects that are defined, managed, and maintained within an organization's environment found on an agile project management digital platform. The aggregation process may then store the data in a centralized data repository that serves as an aggregated source of the data. As previously noted, a project is a common organizational construct found in agile project management digital platforms that provides a repository for source code and a place where one or more teams assigned to the project can plan, track progress, and collaborate on building a software solution. Projects are typically maintained as independent containers/instances on the agile project management digital platform and therefore, any data that is collected for a project is also stored and maintained independent from the data collected, stored, and maintained for the other projects.

In various embodiments, the aggregation process makes use of data pipelines in accessing and retrieving the data from the different projects. In general, a data pipeline is a structured workflow that automates the process of performing operations on data such as collecting, copying, moving, transforming, manipulating, storing, and/or the like the data. A data pipeline generally includes a set of activities that perform operations on the data. A data pipeline allows for managing the activities as a set, as opposed to each activity individually. As a result, a data pipeline can be deployed to execute the set of activities instead of having to deploy and execute each of the activities individually.

In some embodiments, the aggregation process may involve deploying a data pipeline for each project to access and retrieve various data for the project. For example, an entity may be developing a software solution that involves executing several projects to build out functionality, capabilities, and/or the like for the software solution. The entity may be represented as an organization on the agile project management digital platform with the projects stored in the organization's environment found on the digital platform. Here, a data pipeline may be deployed for each of the projects and executed to retrieve iteration data as iterations (e.g., sprints) are performed for the projects in building out the functionality, capabilities, and/or the like for the software solution.

In some embodiments, each of the data pipelines may be configured to execute based at least in part on one or more triggering events occurring. For example, a data pipeline may be configured to execute at the completion of an iteration for the corresponding project. As another example, a data pipeline may be configured to execute at a certain time of day, at the expiry of a period of time, and/or the like.

Once triggered, the aggregation process may involve retrieving, via a first data movement activity defined in a first data pipeline, first iteration data for a first project defined for the organization that is found in the organization's environment on the agile project management digital platform. For example, the first iteration data may involve an iteration that has been performed by a first team for the first project.

The first project may be stored as a first instance on the digital platform, and the first data pipeline may be configured to communicate with the first instance. For example, a path for the first instance may be defined via a uniform resource locator ("URL"). Here, the first data movement activity found in the first data pipeline may use the URL in locating and communicating with the first instance as the data resource for the iteration. In addition, the URL may identify the first team to enable the first data movement activity to filter out those iterations performed for the first project by the first team.

The aggregation process may continue with processing the first iteration data via a first data transformation task defined in the first data pipeline. In various embodiments, a centralized data repository is maintained for the organization's environment on the agile project management digital platform. Therefore, the aggregation process may involve processing the first iteration data to parse the data found in the first iteration data to populate fields found in the centralized data repository. For example, the centralized data repository may be a database, and the first data transformation activity may process the first iteration data to at least one of insert or update a first record in a table of the database. The first record may comprise a set of fields that includes values based at least in part on the first iteration data.

In addition to an iteration being performed for the first project, an iteration may also be performed for a second project defined for the organization that is found in the organization's environment on the agile project management digital platform. Once triggered, the aggregation process may involve retrieving, via a second data movement activity defined in a second data pipeline, second iteration data for the second project. For example, the second iteration data may involve an iteration that has been performed by a second team for the second project.

Like the first project, the second project may be stored as a second instance on the digital platform, and the second data pipeline may be configured to communicate with the second instance. For example, a path for the second instance may be defined via a URL and the second data movement activity may use the URL in locating and communicating with the second instance as the data resource for the iteration performed for the second project. Again, the URL may also identify the second team to enable the second data movement activity to filter out those iterations performed for the second project by the second team.

The aggregation process may continue with processing the second iteration data via a second data transformation task defined in the second data pipeline. Similar to processing the first iteration data, the aggregation process may involve processing the second iteration data to parse the data found in the second iteration data to populate fields found in the centralized data repository. For example, the second data transformation activity may process the second iteration data to at least one of insert or update a second record in the same table of the centralized data repository. Again, the second record may comprise the same set of fields but here, the set of import fields includes values based at least in part on the second iteration data.

As a result of the aggregation process processing the first iteration data and the second iteration data, data for the iteration performed for the first project and data for the iteration performed for the second project are now found in the centralized data repository. Therefore, the digital platform now provides aggregate data for both the first project and the second project that are being performed to build out functionality, capabilities, and/or the like for the software solution and as a result, provides aggregate data representing the relationship between the first and second projects. The entity (e.g., organization) can now draw upon this aggregate data in conducting an analysis on the first and second projects. For example, the entity can draw upon the aggregate data in conducting a comparative analysis on performing the iterations for both the first and second projects.

As an illustrative example, the entity may be interested in performing an analysis on the first team's performance and the second team's performance on the iterations. Here, the entity may be interested in comparing the teams' performances on meeting deliverable requirements set out for the iterations, comparing the teams' productivity and efficiency in performing the iterations, comparing the quality of the deliverables produced by the teams in performing the iterations, and/or the like. Although the first project and the second project may be "linked" within the digital platform via a portfolio, the portfolio dashboard typically only provides a high-level view of the progress on the projects and does not provide capabilities to conduct any type of complex comparative analysis such as the entity would like to carry out.

In addition, under a conventional agile project management digital platform, such an analysis would be difficult, if not impossible, since the first and second projects are maintained as separate organizational constructs on the digital platform and therefore, the data for each of the projects, and corresponding iterations, is maintained in separate instances. Therefore, any type of analytics tools that may be used in performing the analysis would have difficulty in doing so since the data needed to conduct the analysis in not in a centralized location (e.g., is not in a centralized data source).

However, embodiments of the present disclosure overcome this technical challenge by providing an aggregation process that can retrieve the iteration data for the different iterations from the instances for the first and second projects and process the iteration data to store the data into a centralized data repository. Therefore, analytics tools used in performing the analysis now have a data source containing aggregate data on the iterations performed by the first and second teams that can be drawn upon in conducting the analysis on the first team's performance and the second team's performance on the iterations.

As previously noted, another technical challenge that is commonly encountered is that typically, agile project management digital platforms only account for conventional organizational constructs that are found in agile project management. However, an entity may wish to institute an organizational framework that includes constructs that are not necessarily found in agile project management.

As previously noted, an entity may be planning to use multiple vendors who are providing personnel (e.g., teams) to work on building out the software solution. Therefore, the entity may wish to implement an organizational framework for conducting agile project management methodologies that includes an entity unit to account for the vendors who are providing the teams. However, the agile project management digital platform that is being used in managing the projects may only provide an organizational construct for the teams, and not one for the vendors who are providing the teams.

Additionally, or alternatively, the software solution may be comprised of several products. For example, the different products may provide certain functionality, capabilities, and/or the like for the software solution in which users of the solution may subscribe to the different products. The products may involve various projects that are carried out to implement the functionality, capabilities, and/or the like within the products. Therefore, the entity may wish to implement an organizational framework that includes constructs to represent both the software solution and the products that are to make up the software solution. However, the agile project management digital platform may only provide an organizational construct (e.g., "portfolio") that can represent each of the individual products, and not an organizational construct that can represent the software solution that is made up of the individual products.

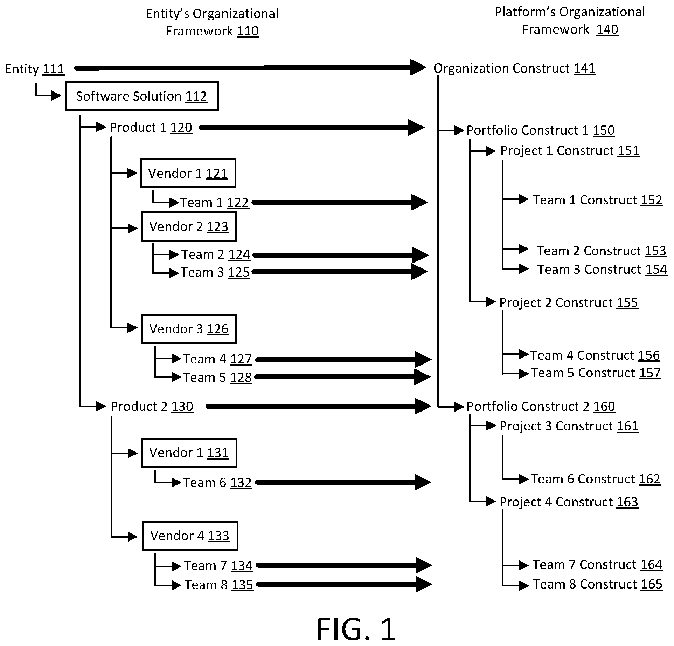

Therefore, a disconnect exists between the entity's desire organizational framework for carrying out agile project management methodologies and the organizational framework provided through the agile project management digital platform. For example, as shown in FIG. 1, the entity's organizational framework 110 may be composed of a hierarchy that includes the entity 111 at the top of the hierarchy with the software solution 112 defined at the next level and the different products 120, 130 defined under the software solution 112. As noted, the entity plans to use multiple vendors to provide teams to work on the different products of the software solution. Therefore, the entity's organizational framework includes vendors 121, 123, 126, 131, 133 under the different products 120, 130 and their corresponding teams 122, 124, 125, 127, 128, 132, 134, 135 under the vendors 121, 123, 126, 131, 133.

However, the agile project management digital platform's organizational framework 140 is composed of a hierarchy that includes an organization construct 141 at the top of the hierarchy with portfolio constructs 150, 160 defined at the next level of the framework 140, project constructs 151, 155, 161, 163 defined under the portfolio constructs 150, 160, and team constructs 152, 153, 154, 156, 157, 162, 164, 165 defined under the project constructs 151, 155, 161, 163. Therefore, any data derived within the portfolio constructs 150, 160 and their corresponding project constructs 151, 155, 161, 163 may account for the products 120, 130 that make up the software solution 112, but would not account for the software solution 112 itself. Likewise, any data derived within the project constructs 151, 155, 161, 163 and their corresponding team constructs 152, 153, 154, 156, 157, 162, 164, 165 may account for the vendors' teams 122, 124, 125, 127, 128, 132, 134, 135, but would not account for the vendors 121, 123, 126, 131, 133 themselves. As a result, it would be difficult for the entity to conduct any type of analysis on the data that would account for the software solution and/or the vendors.

Various embodiments of the disclosure address this technical challenge by providing a centralized data repository with a data structure that can be configured to account for custom organizational constructs. For example, the centralized data repository may be a database, and the data structure may comprise a schema that contains various tables with fields to store data for the software solution 112 and the relationships between the software solution 112 and various products 120, 130 that make up the software solution 112. In addition, the schema may contain various tables and fields to store data that identifies the vendors 121, 123, 126, 131, 133 along with the relationships between the vendors 121, 123, 126, 131, 133 and their teams 122, 124, 125, 127, 128, 132, 134, 135.

For example, the schema may be configured to include a table that contains a record for each vendor 121, 123, 126, 131, 133. The record may include fields that provide various data on the vendor 121, 123, 126, 131, 133 such as a unique identifier for the vendor 121, 123, 126, 131, 133, the name of the vendor 121, 123, 126, 131, 133, contact information for the vendor 121, 123, 126, 131, 133, an indicator as to whether the vendor 121, 123, 126, 131, 133 is currently involve with any products 120, 130, and/or the like. Additionally, or alternatively, the schema may include a table that contains records linking each of the vendors 121, 123, 126, 131, 133 to their corresponding teams 122, 124, 125, 127, 128, 132, 134, 135. As a result, the schema for the database can account for the vendors 121, 123, 126, 131, 133 as a construct in the entity's organizational framework, although the digital platform's organizational framework does not do so. Further, the schema for the database can facilitate conducting an analysis on the vendors 121, 123, 126, 131, 133, their corresponding teams 122, 124, 125, 127, 128, 132, 134, 135, and/or the like. For example, the schema may allow for a comparative analysis to be conducted on the performances of the vendors 121, 123, 126, 131, 133 and/or their corresponding teams 122, 124, 125, 127, 128, 132, 134, 135.

Accordingly, in various embodiments, the aggregation process may involve processing data retrieved from the agile project management digital platform to store the data in the centralized data repository to account for the custom organizational construct as defined by the entity. In some embodiments, the aggregation process may involve initially storing the data retrieved from the agile project management digital platform into one or more import tables that include fields reflective of the organizational framework of the digital platform. For example, the aggregation process may involve initially storing iteration data retrieved for iterations performed for various projects into an import table that includes a set of import fields reflective of the data collected for an iteration conducted for a project construct defined by the organizational framework of the digital platform.

The aggregation process may then involve processing the data stored in one or more import tables to facilitate storing the data in one or more tables that include fields reflective of the organizational framework defined by the entity. For example, the aggregation process may involve processing the data stored in the import table for the iterations to store the iteration data into an iteration table that includes a set of iteration fields. Accordingly, the centralized data repository may include additional tables and/or fields along with the iteration table to account for the custom construct.

Therefore, returning to the example involving the first iteration performed by the first team for the first project and the second iteration performed by the second team for the second project, the aggregation process may involve processing the first import values found in the set of import fields for the first import record to at least one of insert or update a first iteration record in an iteration table of the centralized data repository to account for the vendor who is associated with the first team that performed the first iteration. Likewise, the aggregation process may involve processing the second import values found in the set of import fields for the second import record to at least one of insert or update a second iteration record in the iteration table of the centralized data repository to account for the vendor who is associated with the second team that performed the second iteration. As a result, the agile project management digital platform may then provide aggregate data that accounts for both vendors who have provided the first team and second team that can be drawn upon in conducting the analysis on the vendors' (e.g., teams' thereof) performances on the first and second projects. Further detail on various aspects of the disclosure is now provided.

### Example Computing Environment

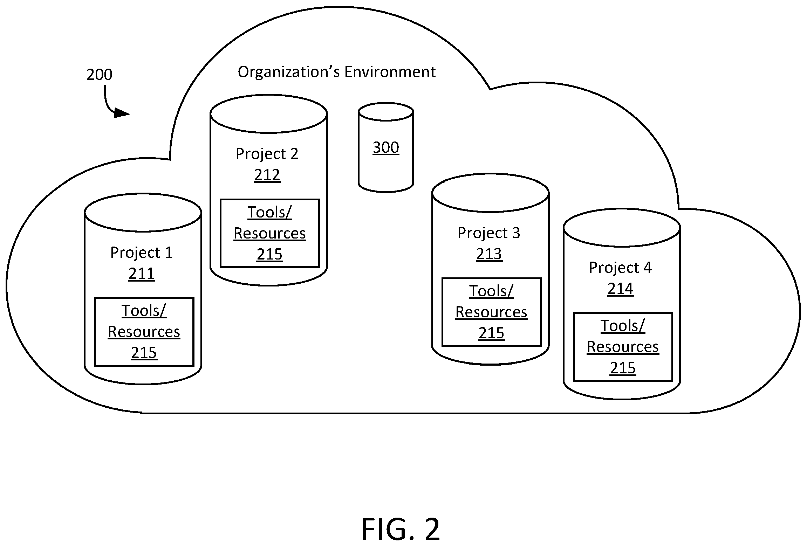

FIG. 2 depicts an example organization's environment 200 provided for an agile project management digital platform in which a centralized data repository 300 is provided according to various embodiments of the disclosure to serve as an aggregate data source for different, autonomous organizational constructs maintained in the agile project management digital platform. In the depicted example, the organization's environment 200 is composed of a plurality of organizational constructs in the form of projects 211-214. The plurality of projects 211-214 are provided as autonomous containers/instances within the agile project management digital platform to allow for one or more teams to work on a project 211-214 using the most appropriate tools and/or resources 215 provided through the digital platform for building out the functionality, capabilities, and/or the like associated with the project 211-214 without concerns over the tools and/or resources 215 being used in building out the functionality, capabilities, and/or the like for other projects 211-214.

In various embodiments, the centralized data repository 300 is provided as a stand-alone data store from the plurality of projects 211-214. For example, the centralized data repository 300 may be provided as a database, a data warehouse, a set of files, and/or the like. Depending on the environment, the centralized data repository 300 may be provided on the agile project management digital platform or on a separate platform such as, for example, a reporting service that is available to the organization's environment 200.

Accordingly, the organization's environment 200 is configured so that the centralized data repository 300 is maintained independently (externally) of the various projects 211-214 to allow for the plurality of projects 211-214 to remain independent of each other. Further, the centralized data repository 300 may be used as an aggregate data source for the different projects 211-214, while also representing relationships that exist between the data of the different projects 211-214, that can be drawn upon to conduct various types of analytics on the data in a manner that can take the relationships between the different projects 211-214 into consideration.

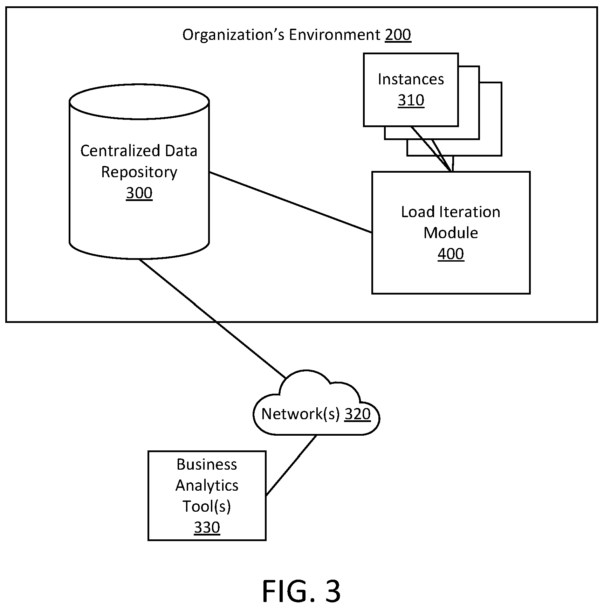

FIG. 3 depicts a further example of the organization's environment 200 that is provided for an agile project management digital platform that includes a centralized data repository 300 according to various embodiments. In various embodiments, the organization's environment 200 is provided through one or more computing systems that include software components and/or hardware components. In addition, the organization's environment 200 may include a load iteration module 400 that is executed to retrieve data from various instances 310 of projects 211-214 defined and maintained within the agile project management digital platform for the organization and process the data to generate aggregate data that is stored in the centralized data repository 300.

Further, the organization's environment 200 may be configured to allow the centralized data repository 300 to be accessed over a network 320 by one or more remote systems, services, computing devices, and/or the like. For example, the organization's environment 200 may be configured to allow for one or more business analytics tools 330 to access the centralized data repository 300 so that the tools 330 can be used in conducting an analysis on the aggregate data that has been gathered from the various projects 211-214 defined and maintained within the agile project management digital platform.

### Load Iteration Module

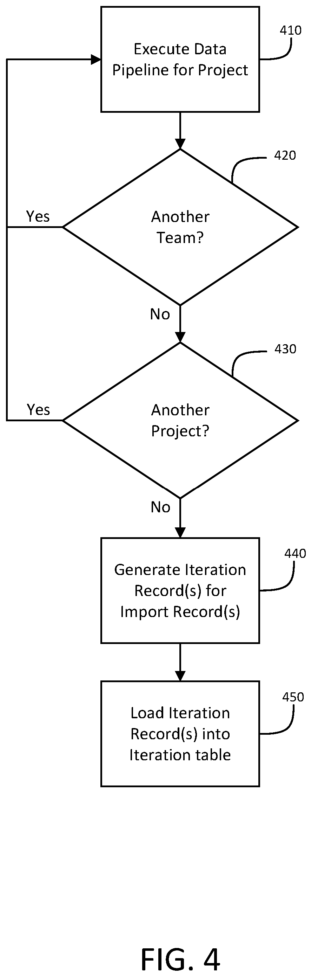

Turning now to FIG. 4, additional details are provided regarding a load iteration module 400 for loading iteration records into an iteration table found in a centralized data repository 300 in accordance with various embodiments of the disclosure. The example process shown in FIG.4 may correspond to operations carried out by a processor of computing hardware such as, for example, a server device described further herein, as it executes the load iteration module 400.

As previously noted, agile project management is an incremental and non-linear approach to managing the development of a software solution that focuses on breaking down projects for developing the software solution into more manageable tasks to be completed in short iterations known as sprints throughout the project life cycle. However, the organizational framework for an agile project management digital platform treats each of these projects as an autonomous construct within the platform. Therefore, as iterations are performed for a project, the data that is generated during these iterations is also treated within the platform as independent of data generated for other projects, rendering the performance any type of comparative analysis on the data for the projects to be difficult.

However, various embodiments of the disclosure address this technical challenge by retrieving the data from the various projects and processing the data into aggregate data that is stored in a centralized data repository 300. In various embodiments, a process for aggregating the data from the different projects may be performed by the load iteration module 400 as iterations for the different projects are performed. In some embodiments, the load iteration module 400 may execute upon the occurrence of a triggering event. For example, the load iteration module 400 may execute upon the status of an iteration being set to completed for a project. As another example, the load iteration module 400 may execute upon expiry of a period of time, or at a certain time of day, so that data on iterations for various projects can be imported into the centralized data repository 300 as a batch process. Yet, as another example, the load iteration module 400 may execute upon an individual manually starting the load iteration module 400.

Once executed, the process involves the load iteration module 400 executing a data pipeline for a first project found within the agile project management digital platform in Operation 410. For example, the load iteration module 400 may identify the first project from a project configuration table provided in the centralized data repository 300. Additionally, or alternatively, the load iteration module 400 may execute a data pipeline for a specific team assigned to the first project. For example, the load iteration module 400 may identify the team from one or more others tables provided in the centralized data repository 300. Depending on the embodiment, the load iteration module 400 may retrieve the corresponding data pipeline for the first project that is configured to communicate with the instance found on the agile project management digital platform for the first project or the load iteration module 400 may generate the data pipeline to configure the data pipeline to communication with the instance.

In some embodiments, the data pipeline includes a data movement activity that is performed to retrieve the iteration data from the instance for the first project and/or team found on the digital platform. For example, the data movement activity may involve calling an application programming interface ("API") to communicate with the instance and retrieve the iteration data for the first project and/or team. The API may communicate with the instance through a path defined for the instance. For example, the path may be defined via a URL that is used in locating and communicating with the instance. Depending on the embodiment, the data movement activity may be populated with the correct URL or the load iteration module 400 may configure the data movement activity with the correct URL. For example, the load iteration module 400 may retrieve the correct URL, or components thereof, from one or more tables provided in the centralized data repository 300 and populate the data movement activity with the correct URL.

In various embodiments, the operation of executing the data pipeline continues with loading the iteration data retrieved from the instance as import records into an import table. Here, the load iteration module 400 may execute a data transformation activity defined in the data pipeline that is performed to load the import records into the import table. For example, the data transformation activity may involve transforming the iteration data provided in the API response into a flat JavaScript Object Notation (JSON) file and utilizing an "upsert" call to store each of the records in the import table. In particular embodiments, an "upsert" call is used to allow for the load iteration module 400 to insert new import records into the import table for newly performed iterations, as well as update existing import records already found in the import table for iterations that were previously performed.

For example, the first project may involve three iterations that have been performed thus far for the first project. At the end of the third iteration, the load iteration module 400 may execute the data pipeline to retrieve iteration data from the instance for the first project that includes data for all three of the iterations that have been performed. In addition, the load iteration module 400 may have been executed at the conclusion of the first two iterations, resulting in an import record being inserted in the import table for each of the first two iterations.

However, during execution of the third iteration, data found in the instance for the first two iterations may have been added, updated, revised, and/or the like. For example, data for one of the first two iterations may have been added to indicate that a bug was discovered in functionality built out during the iteration after the functionality had been deployed into production. The entity may desire that data stored in the centralized data repository 300 to reflect the discovered bug. Therefore, the entity may desire that the load iteration module 400 is configured to process the iteration data retrieved after the conclusion of the third iteration so that the import record found in the import table for the iteration in which the bug was discovered is updated to reflect such.

Additionally, or alternatively, the data pipeline for the first project may comprise a custom data transformation activity for the first project. The data pipeline may be configured as such because the first project may generate data that is in a specific format that is advantageous for the first project and/or a first team assigned to the first project, but not necessarily found in the same format for other projects found on the digital platform for the entity.

As previously noted, a core advantage of agile project management is that it empowers teams to work independently and self-organize in completing their assigned tasks. A team assigned to the first project may decide to collect data for iterations that is configured in a certain format that the team finds advantageous in organizing and completing their assigned tasks. However, a team for another project may decide to collect the same or similar data for iterations that is configured with a different format that they find advantageous in organizing and completing their assigned tasks. As a result, the data retrieved for iterations for the two projects and corresponding teams is not provided in a standard format. Therefore, in various embodiments, the data pipeline for each of the two projects and corresponding teams may include a custom data transformation activity that is configured to process (e.g., normalize) the data retrieved for iterations having the different formats to produce an import field for the iterations performed for the two projects in a standard format.

As noted, in some embodiments, the load iteration module 400 may execute a data pipeline for a specific team assigned to the first project. Therefore, the load iteration module may determine whether another team is assigned to the first project in Operation 420. If the load iteration module 400 determines that another team is assigned to the first project, then the load iteration module 400 may return to Operation 410 and execute a data pipeline for the first project found within the agile project management digital platform, but for the other team assigned to the first project. Accordingly, the load iteration module 400 may then import iteration data for the other team into the import table.

Once the load iteration module 400 has processed the iteration data for the first project, the load iteration module 400 may be configured in some embodiments to determine whether another project exists on the digital platform for the entity in Operation 430. However, in other embodiments, the load iteration module 400 may not perform this operation. For example, whether the load iteration module 400 performs this operation may be contingent on the triggering event that has occurred to cause execution of the load iteration module 400. If the triggering event was the completion of an iteration for a project, then the load iteration module 400 may be configured to not perform the operation so that only iteration data for the project is processed. However, if the triggering event was the expiry of a period of time or occurrence of a certain time of day, then the load iteration module 400 may be configured to perform the operation.

If the load iteration module 400 does perform the operation and determines that another project does exist on the digital platform for the entity, then the load iteration module 400 returns to Operation 410 and executes the data pipeline for the newly identified project to retrieve and process iteration data for the newly identified project. The load iteration module 400 then continues until the load iteration module 400 has retrieved and processed iteration data for each of the projects found on the digital platform for the entity.

At Operation 440, the load iteration module 400 generates iteration records based at least in part on the import fields of the import records found in the import table for the iterations. In various embodiments, the load iteration module 400 performs this operation to generate iteration fields from the import fields of the import records that are desired to be available in the centralized data repository 300. For example, the entity may desire that a release date be an available field for each of the iteration records stored in the centralized data repository 300 so that the field is available to search for purposes of conducting an analysis on iterations that have been performed for a project, a team, a set of projects, a set of teams, and/or the like. However, the release date may only be available in an import field that includes other data besides the release date. For example, the release date may only be available in an import field that includes the iteration path for the iteration. Therefore, the load iteration module 400 may be configured to parse the iteration path found in an iteration path field of the import record for the iteration to generate a release date field for the iteration record.

In some embodiments, the load iteration module 400 may be configured to only generate iteration records for the iterations for which the load iteration module 400 has inserted or updated import records in the import table during the current execution of the load iteration module 400. In other embodiments, the load iteration module 400 may be configured to generate iteration records for all the iterations having import records found in the import table.

For example, whether the load iteration module 400 processes certain import records or all the import records may be contingent on the triggering event that has occurred to cause execution of the load iteration module 400. If the triggering event was the completion of an iteration for a project, the expiry of a period of time, or an occurrence of a certain time of day, then the load iteration module 400 may be configured to only process the import records that were inserted or updated during the current execution of the load iteration module 400. However, if the triggering event was an individual manually executing the load iteration module 400, then the load iteration module 400 may be configured to process all the import records found in the import table. For example, personnel for the entity may be interested in manually executing the load iteration module 400 at certain times of the year when the entity is conducting a significant analysis to ensure the data stored in the centralized data repository 300 reflects all the iterations carried out for the different projects.

At Operation 450, the load iteration module 400 loads the iteration records into an iteration table found in the centralized data repository 300. In various embodiments, the load iteration module 400 may be configured to carry out this operation in a similar manner as loading import records into the import table by using an "upsert" call to allow for the load iteration module 400 to insert new iteration records into the iteration table for newly performed iterations, as well as update existing iteration records already found in the iteration table for iterations that were previously performed.

In some embodiments, the load iteration module 400 may load records into other tables found within the centralized data repository 300. For example, the load iteration module 400 may load one or more records into a project to iteration table to link (e.g., establish relationships) between the iterations for which the iteration records represent and the projects for which the iterations were performed. Additionally, or alternatively, the load iteration module 400 may load one or more records into a team to iteration table to link (e.g., establish relationships) between the iterations for which the iteration records represent and the teams who were involved in the iterations.

Thus, in various embodiments, the load iteration module 400 provides a process for aggregating data into a centralized data repository 300 for the different, autonomous projects maintained in the agile project management digital platform for the entity. As a result, the centralized data repository 300 may provide aggregate data that can represent relationships between the projects that can be drawn upon in conducting an analysis on the projects, corresponding teams, corresponding iterations, and/or the like.

### Example Data Structure of the Centralized Data Repository

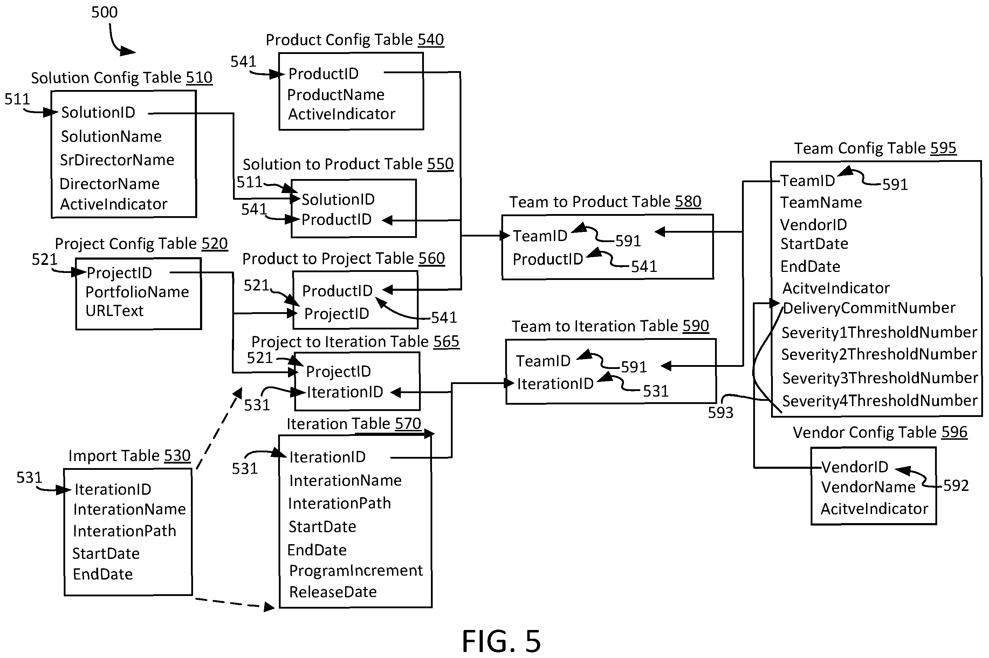

As previously noted, various embodiments of the disclosure provide technologies that allow for an entity to define custom organizational constructs, as well as enable agile project management digital platforms to account for such custom organizational constructs in providing monitoring and reporting functionality that can be based at least in part on the custom organizational constructs. FIG. 5 provides an example data structure 500 of a centralized data repository 300 that is configured around custom organizational constructs that may enable an agile project management digital platform to account for the custom organizational constructs in providing monitoring and reporting functionality that can be based at least in part on the custom organizational constructs.

The data structure 500 shown in FIG. 5 includes a set of tables that are configured according to a schema defined for a database. In turn, the database serves as the centralized data repository 300 for the agile project management digital platform. However, one of ordinary skill in the art should recognize considering this disclosure, that other types of data stores may be used as the centralized data repository 300. For example, the data structure 500 may include a set of files and/or folders that are configured in a hierarchical arrangement to define a set of directories that serves as the centralized data repository 300 for the agile project management digital platform.

In various embodiments, the data structure 500 may include tables that store data to account for different conventional constructs found in the organizational frameworks of various agile project management digital platforms. For example, the data structure 500 may include a project configuration table 520 that accounts for the project construct. The project configuration table may include a data record for each of the projects defined within the organization environment of an entity found on the agile project management digital platform. Each of the data records may include a set of fields that store various types of data on the corresponding project such as, for example, a portfolio associated with the project, a path for locating and communicating with the project, an indicator providing a status of the project, and/or the like. In addition, each of the data records may include a field 521 that stores a unique identifier for the project.

Additionally, or alternatively, the data structure 500 may include a product configuration table 540 that accounts for the product (e.g., portfolio) construct found in the organizational frameworks of various agile project management digital platforms. The product configuration table 540 may include a data record for each of the products related to the projects defined within the organization environment of the entity. Each of the records may include a set of fields that store various types of data on the corresponding product such as, for example, a name for the product, a description of the product, an indicator on a status of the product, and/or the like. In addition, each of the records may include a field 541 that stores a unique identifier for the product.

Additionally, or alternatively, the data structure 500 may include a team configuration table 595 that accounts for the team construct found in the organizational frameworks of various agile project management digital platforms. The team configuration table 595 may include a data record for each team defined within the organization environment of the entity that can be assigned to various projects. Each of data records may include a set of fields that store various types of data on the corresponding team such as, for example, a team name, a start date for the team, an end date for the team, an indicator providing a status for the team, and/or the like. In addition, each of the records may include a field 591 that stores a unique identifier for the team.

Additionally, or alternatively, the data structure 500 may include an iteration table 570 that stores data records on various iterations performed for the projects defined within the organization environment of the entity. As previously discussed, each of the data records may include a set of fields that store various types of data on the corresponding iteration such as, for example, a name for the iteration, a path for the iteration, a start date of the iteration, an end date of the iteration, and/or the like. In addition, each of the records may include a field 531 that stores a unique identifier for the iteration. Accordingly, as previously discussed, the iteration table 570 may be populated via an import table 530.

Further, in various embodiments, the data structure 500 may include tables that store data to account for custom organizational constructs that are not necessarily found in many agile project management digital platforms. For example, the entity may wish to use an organizational framework for developing and managing different software solutions involving various products that make up the software solutions through the agile project management digital platform that account for the different software solutions and vendors who provide teams to work on developing the corresponding products of the different software solutions.

Therefore, the data structure 500 may include a solution configuration table 510 to incorporate a software solution organizational construct in the organizational framework to account for the different software solutions. The solution configuration table 510 may include a data record for each software solution that is being developed and managed by the entity through the agile project management digital platform. Each of the records may include a set of fields that store various types of data on the corresponding software solution. Here, the entity may define the set of fields to include fields for data that the entity may be interested querying, analyzing, reviewing, and/or the like when conducting an analysis that is to consider one or more of the software solutions. For example, the entity may define the set of fields to include a name for the software solution, a name of a senior director and/or director who oversees developing the software solution, an indicator providing a status of the software solution, and/or the like. In addition, each of the records may include a field 511 that stores a unique identifier for the software solution.

Additionally, or alternatively, the data structure 500 may include a vendor configuration table 596 to incorporate a vendor organizational construct into the organizational framework to account for the vendors who provide teams to work on the different software solutions. Each of the records may include a set of fields that store various types of data on the corresponding vendor that again, the entity may define to include fields for data that the entity may be interested querying, analyzing, reviewing, and/or the like when conducting an analysis that is to consider one or more of the vendors. For example, the entity may define the set of fields to include a name of the vendor, contact information for the vendor, an indicator on a status of the vendor, and/or the like. In addition, each of the records may include a field 592 that stores a unique identifier for the vendor.

In various embodiments, the data structure 500 may further include tables that define relationships between the various conventional organizational constructs and/or the custom organizational constructs. For example, the data structure 500 may include a solution to product table 550 that identifies relationships between the different software solutions being developed by the entity and their corresponding products. The solution to product table 550 may store records that include a field 511 storing the unique identifier for the software solution and a field 541 storing the unique identifier for the corresponding product to represent the relationship between a software solution and a product being developed for the software solution.

The solution to product table 550 may include one or more records for a software solution depending on the number of corresponding products that are being developed to include in the software solution. For example, the entity may be developing a software solution that is to include four different products and therefore, the solution to product table 550 would include four records for the software solution with each record linking the software solution to one of the four different products.

Additionally, or alternatively, the data structure 500 may include a product to project table 560 that identifies relationships between the products being developed for the different software solutions and their corresponding projects being managed through the agile project management digital platform to build out the products. The product to project table 560 may store records that include a field 541 storing the unique identifier for the product and a field 521 storing the unique identifier for the corresponding project to represent the relationship between the product and the corresponding project that is being managed through the digital platform in building out the product.

Like the solution to product table 550, the product to project table 560 may include one or more records for a product depending on the number of corresponding projects that are being managed through the agile project management digital platform to build out the product. For example, the entity may be managing three projects through the digital platform in building out the product and therefore, the product to project table 560 would include three records for the product with each record linking the product to one of the three different projects that are being managed through the digital platform.

Additionally, or alternatively, the data structure 500 may include a team to product table 580 that identifies relationships between the different teams and their corresponding products they are assisting in building out. The team to product table 580 may store records that include a field 591 storing the unique identifier for the team and a field 541 storing the unique identifier for the corresponding product. Accordingly, the team to product table 580 may include one or more records for a team depending on the number of corresponding products that are being worked on by the team. For example, the team may be working on building out three different products and therefore, the team to product table 580 would include three records for the team with each record linking the team to one of the three different products that the team is working on.

Additionally, or alternatively, the data structure 500 may include a team to iteration table 590 that identifies relationships between the different teams and their corresponding iterations on which they performed. The team to iteration table 590 may store records that include a field 591 storing the unique identifier for the team and a field 531 storing the unique identifier for the corresponding iteration. Accordingly, the team to iteration table 590 may include one or more records for a team depending on the number of iterations performed by the team. For example, the team may have performed four iterations for a particular project and therefore, the team to iteration table 590 would include four records for the team with each record linking the team to one of the four iterations that the team performed.

Additionally, or alternatively, the data structure 500 may include a project to iteration table 565 that identifies relationships between the different projects and the corresponding iterations performed for the projects. The project to iteration table 565 may store records that include a field 521 storing the unique identifier for the project and a field 531 storing the unique identifier for the corresponding iteration. Accordingly, the project to iteration table 590 may include one or more records for a project depending on the number of iterations performed for the project. For example, two iterations may have been performed for a particular project and therefore, the project to iteration table 565 would include two records for the project with each record linking the project to one of the two iterations that were performed.

Accordingly, the data structure 500 of the centralized data repository 300 shown in FIG. 5 may facilitate conducting various types of analytics involving the different organizational constructs that would be difficult, if not impossible, to conduct based on the organizational framework found in typical agile project management digital platforms. That is to say, in various embodiments, the data structure 500 of the centralized data repository 300 may facilitate conducting various types of analytics based at least in part on non-conventional organizational constructs and/or relationships between organizational constructs that would be difficult, if not impossible, to conduct based on the organizational framework found in typical agile project management digital platforms.

As an illustrative example, an entity may be interested in performing an analysis to assess the performance of various vendor teams who are working on building out different products of a software solution. The entity's assessment of a team's performance is to be based at least in part on three metrics: (1) the team's ability to meet contractual obligations; (2) the team's productivity and efficiency; and (3) the quality of deliverables produced by the team. The team's ability to meet contractual obligations, or delivery metric, measures the extent to which a vendor's team meets their contractual obligations in terms of deliverables. The analysis involves comparing the amount of work that the team is contractually required to deliver with what the team has committed to deliver and assesses the team's ability to meet their delivery promises. The team's productivity and efficiency, or velocity metric, evaluates the amount of work that a vendor's team has committed to delivering and compares it with what they have delivered. This metric is effective for understanding how well the team is performing against their planned workload and their ability to maintain a consistent pace of work. The quality of deliverables produced by the team, or quality metric, assesses the quality of the deliverables produced by a vendor's team. The metric is calculated against predefined quality thresholds to ensure that the work meets the required standards and is effective for ensuring that the deliverables are not only completed on time, but also meet the expected quality levels.

The entity may employ some type of business analytics tool to conduct the analysis. For example, the entity may employ the Microsoft^{®} Power BI^{®} platform. The platform allows users to connect to the centralized data repository 300 and transform and aggregate data stored within the repository 300 to conduct the desired analysis on the vendor teams and provide the results of the analysis through reporting tools. For example, the platform allows for users to create interactive dashboards and/or reports to share the analysis on the vendor teams with others. Here, the Power BI^{®} platform may connect to and pull data from the centralized data repository 300 through a service such as Open Data Protocol (OData) queries.

The process for conducting the analysis may involve initially setting up business requirements (e.g., business rules) to be used in performing the analysis on the vendor teams. For example, the entity (e.g., user) may define weightage for each of the metrics such as forty percent for the delivery metric, twenty percent for the velocity metric, and forty percent for the quality metric. Additionally, or alternatively, the entity may define weightages for the impact of a bug, issue, risk, and/or the like on a project. For example, the entity may define the weightage for a "critical" bug, issue, risk, and/or the like to be fifty-five percent, the weightage for a "high" bug, issue, risk, and/or the like to be thirty percent, the weightage for a "minor" bug, issue, risk, and/or the like to be ten percent, and the weightage for a "low" bug, issue, risk, and/or the like to be five percent.

In addition to the business requirements, the entity may define the algorithm for calculating each of the metrics, as well as the overall performance score for a vendor team. For example, the entity may define the algorithm for calculating the delivery metric as the total story points closed by the vendor team in the agile project management digital platform divided by the total story points committed by the vendor team times one hundred. The entity may define the algorithm for calculating the velocity metric as the total story points closed by the vendor team in the agile project management digital platform divided by the total story points for the software solution in digital platform times one hundred.

The entity may define each of the bug scores for the different types of bugs, issue, risk, and/or the like as the total number of the type of bug, issue, risk, and/or the like minus a threshold number set for the type of bug, issue, risk, and/or the like times the weightage set for the type of bug, issue, risk, and/or the like. The entity may define the quality metric as one hundred minus each of the bug scores for the different types of bugs, issues, risks, and/or the like. The entity may define the overall performance score for the vendor team as the sum of each of the different metrics times their weightage.

The business analytics tool may gather a vendor team's deliverable commitments and thresholds for the different types of bugs, issues, risks, and/or the like from various sources. For example, the business analytics tool may gather the data from electronic documents that contain the data such as an electronic document containing a statement of work for the vendor team. In other instances, the business analytics tool may gather the data from the centralized data repository 300. For example, the business analytics tool may gather the data 593 from the team configuration table 595.

Accordingly, the business analytics tool may gather the data needed for generating the performance score for each of the vendor teams from the centralized data repository 300. For example, the business analytics tool may identify the teams that are working on the software solution through using a combination of the solution configuration table 510, the solution to product table 550, the team to product table 580, and the team configuration table 595 to identify those teams who are working on the software solution. In addition, the business analytics tool may gather additional data on the individual products that are being developed for the software solution using a combination of the solution configuration table 510, the solution to product table 550, and the product configuration table 540. Further, the business analytics tool may gather data on the vendors who are providing the teams working on the software solution through a combination of the team configuration table 595 and the vendor configuration table 596.

Furthermore, the business analytics tool may gather the data related to each of the individual team's performance from the centralized data repository 300. For example, data on the total story points closed by each of the teams, the total story points for the software solution in digital platform, and the number of the types of bugs, issues, risks, and/or the like for each of the teams may be provided in the iteration table 570. Therefore, the business analytics tool may use a combination of the solution configuration table 510, the solution to product table 550, the product to project table 560, the project to iteration table 565, the iteration table 570, and the team to iteration table 590 to gather such data. The business analytics tool may then use the gathered data from the centralized data repository 300 in generating a performance score of each of the vendor teams working on the software solution.

Thus, the centralized data repository 300, and data structure 500 thereof, provides the business analytics tool with the instruments, mechanisms, tools, and/or the like needed to generate the performance score for each of the vendor teams. Specifically, the centralized data repository 300, and data structure 500 thereof, provides the business analytics tool with an aggregate data source for the data needed on all the vendor teams who are working on the software solution to enable the business analytics tool to calculate a performance score for each of the vendor teams. In addition, the centralized data repository 300, and data structure 500 thereof, provides the business analytics tool with a data source to identify the relationships between the software solution, the products being developed for the software solution, the teams who are working on the products, and the vendors who are providing the teams. Further, the centralized data repository 300, and data structure thereof, provides the business analytics tool with the data source to allow the business analytics tool to carry out the process for generating the performance scores for the different vendor teams based at least in part on custom organizational constructs such as the software solution and/or the vendors.

It should be understood by the reader that the data structure 500 provided in FIG. 5 is but one example of a data structure 500 that can be used in implementing various aspects of the disclosure and that other data structures 500 that include different tables, fields, data, and/or the like are possible. For example, in particular embodiments, the data structure 500 may include an area configuration table that defines area paths used by various teams within projects to organize work items that are used to track various aspects of a project such as requirements, bugs, tasks, and/or the like. Additionally, or alternatively, the data structure 500 may include a product to area table that identifies relationships between products and work areas. The two tables may facilitate establishing a one-to-many relationship that can be used across different instances found on an agile project management digital platform that may share work items for a same product. Lastly, it should be understood that other data structures 500 are possible to account for the custom organizational constructs, as well as other data structures are possible to account for other types of custom organizational constructs.

### Example Technical Platforms

Embodiments of the disclosure may utilize various components such as computing systems and/or devices, storage devices, and/or the like, in performing various operations. Accordingly, these components involved in embodiments of the present disclosure may perform instructions that are implemented in various ways, including as computer program products that comprise articles of manufacture. Such computer program products may include one or more software components including, for example, software objects, methods, data structures, and/or the like. A software component may be coded in any of a variety of programming languages. An illustrative programming language may be a lower-level programming language such as an assembly language associated with a particular hardware architecture and/or operating system platform. A software component comprising assembly language instructions may require conversion into executable machine code by an assembler prior to execution by the hardware architecture and/or platform. Another example programming language may be a higher-level programming language that may be portable across multiple architectures. A software component comprising higher-level programming language instructions may require conversion to an intermediate representation by an interpreter or a compiler prior to execution.

Other examples of programming languages include, but are not limited to, a macro language, a shell or command language, a job control language, a script language, a database query, or search language, and/or a report writing language. In one or more example embodiments, a software component comprising instructions in one of the foregoing examples of programming languages may be executed directly by an operating system or other software component without having to be first transformed into another form. A software component may be stored as a file or other data storage construct. Software components of a similar type or functionally related may be stored together such as, for example, in a particular directory, folder, or library. Software components may be static (e.g., pre-established, or fixed) or dynamic (e.g., created or modified at the time of execution).

A computer program product may include a computer-readable storage medium that is considered non-transitory storing applications, programs, program modules, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such computer-readable storage media include all computer-readable media that is considered non-transitory (including volatile and non-volatile media), but does not include computer-readable media that is considered transitory.

In some embodiments, a non-volatile computer-readable storage medium may include a floppy disk, flexible disk, hard disk, solid-state storage (SSS) (e.g., a solid-state drive (SSD), solid state card (SSC), solid state module (SSM)), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (e.g., Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In some embodiments, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, register memory, and/or the like. It will be appreciated that where various embodiments are described to use a computer-readable storage medium, other types of computer-readable storage media may be substituted for or used in addition to the computer-readable storage media described above.

Various embodiments of the present disclosure, and/or components thereof and/or that are utilized, may also be implemented as methods, apparatuses, systems, computing devices, computing entities, and/or the like. As such, various embodiments of the present disclosure, and/or components thereof and/or that are utilized, may take the form of a data structure, apparatus, system, computing device, computing entity, and/or the like executing instructions stored on a computer-readable storage medium to perform certain steps or operations. Thus, various embodiments of the present disclosure, and/or components thereof and/or that are utilized, also may take the form of entirely hardware, entirely computer program product, and/or a combination of computer program product and hardware performing certain steps or operations.

Various embodiments of the present disclosure, and/or components thereof and/or that are utilized, are described herein with reference to block diagrams and flowchart illustrations. Thus, each block of the block diagrams and flowchart illustrations may be implemented in the form of a computer program product, an entirely hardware embodiment, a combination of hardware and computer program products, and/or apparatuses, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some examples of embodiments, retrieval, loading, and/or execution may be performed in parallel such that multiple instructions are retrieved, loaded, and/or executed together. Thus, such embodiments can produce specially configured machines performing the steps or operations specified in the block diagrams and flowchart illustrations. Accordingly, the block diagrams and flowchart illustrations support various combinations of embodiments for performing the specified instructions, operations, or steps.

### Example System Architecture

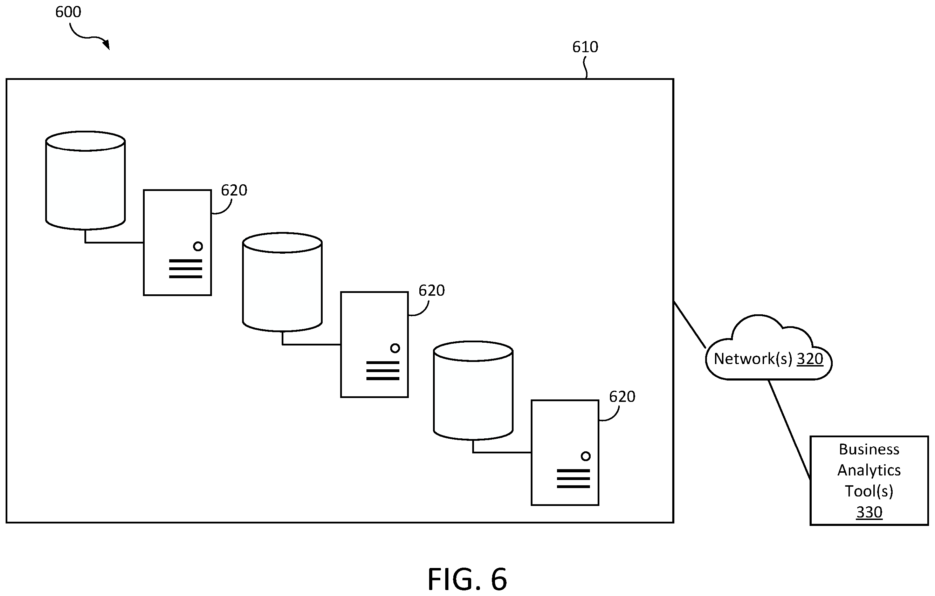

**FIG** 6 depicts an example of a system architecture 600 that can be used to execute implementations of various aspects of the present disclosure. The architecture 600 includes one or more business analytics tools 330, a server system 610 (which can be multiple server systems 610 in some implementations), and a network 320. The server system 610 includes one or more server devices 620. In various embodiments, a user can use a business analytics tool 330 to interact with a centralized data repository 300 provided for an agile project management digital platform that is hosted by the server system 610. For example, the server system 610 may provide a cloud infrastructure to host the agile project management digital platform. In addition, an entity such as organization can subscribe to one or more of the services provided through the agile project management digital platform and become a "user" of the digital platform.

In various embodiments, each server device 620 may include at least one server and at least one data store. The server devices 620 may represent various forms of servers including, but not limited to a web server, an application server, a proxy server, a network server, and/or a server pool. A business analytics tool 330 may reside on any appropriate type of computing device such as a server, a desktop computer, a laptop computer, a handheld computer, a tablet computer, a personal digital assistant (PDA), a cellular telephone, a network appliance, a smart phone, and/or the like.

The business analytics tool 330 may communicate with one or more of the server devices 620 over the network 320 to allow the user to perform functionality provided through the business analytics tool 330 with respect to data found in the centralized data repository 300 and/or agile project management digital platform as described herein. Accordingly, the network 320 can involve a variety of different networks such as, for example, a large computer network, such as a local area network (LAN), a wide area network (WAN), the Internet, a cellular network, a telephone network (e.g., PSTN) or an appropriate combination thereof. In general, the server system 610 can accept requests involving data stored within the centralized data repository 300 over the network 320.

### Example Computing Hardware

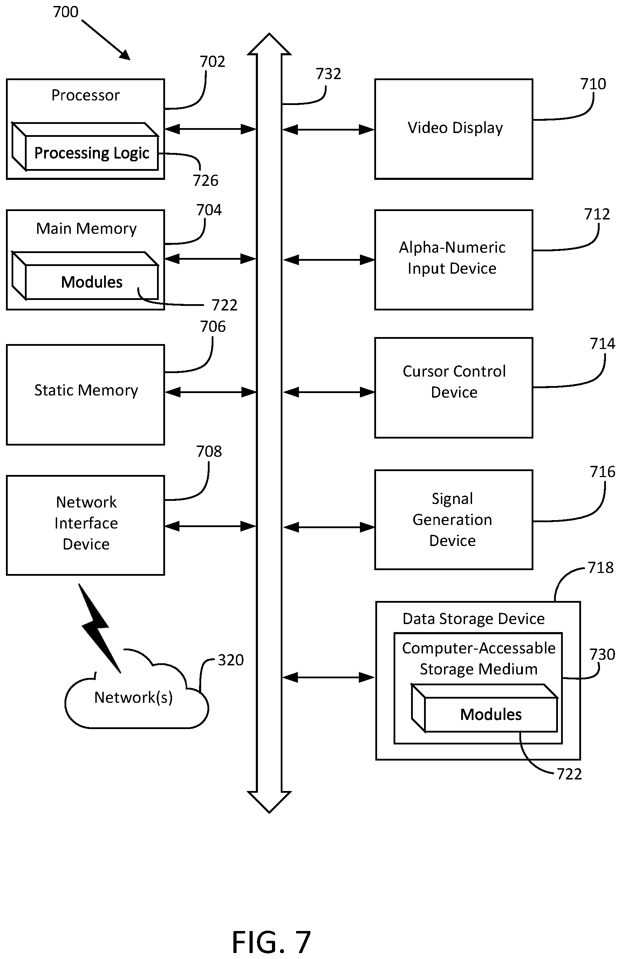

FIG. 7 illustrates a diagrammatic representation of an example of computing hardware 700 that can be used within the system architecture 600. For example, the computing hardware 700 may be one or more of the server devices 620 as described in FIG. 6. In various embodiments, the computing hardware 700 may be connected (e.g., networked) to other computing hardware via a wireless network, a LAN, an intranet, an extranet, and/or the Internet. The computing hardware 700 may operate in the capacity of a server, a client computer in a client-server network environment, a peer computer in a peer-to-peer (or distributed) network environment, and/or the like. The computing hardware 700 may be, for example, a desktop personal computer (PC), a tablet PC, a set-top box (STB), a Personal Digital Assistant (PDA), a cellular telephone, a web appliance, a server, a network router, a switch or bridge, or any other computing hardware capable of executing a set of instructions (sequential or otherwise) that specify actions to be taken by the computing hardware 700. Further, while the computing hardware 700 is shown as a single computing entity in FIG. 7, the term "computing hardware" shall also be taken to include any collection of computing entities that individually or jointly execute a set (or multiple sets) of instructions to perform any one or more of the methodologies/functionalities described herein.

The computing hardware 700 includes a processing device 702, a main memory 704 (e.g., read-only memory (ROM), flash memory, dynamic random-access memory (DRAM) such as synchronous DRAM (SDRAM) or Rambus DRAM (RDRAM), etc.), a static memory 706 (e.g., flash memory, static random-access memory (SRAM), etc.), and a data storage device 718, which communicate with each other via a bus 732.

The processing device 702 represents one or more general-purpose processing devices such as a microprocessor, a central processing unit, and/or the like. More particularly, the processing device 702 may be a complex instruction set computing (CISC) microprocessor, reduced instruction set computing (RISC) microprocessor, very long instruction word (VLIW) microprocessor, or processor implementing other instruction sets, or processors implementing a combination of instruction sets. The processing device 702 may also be one or more special-purpose processing devices such as an application specific integrated circuit (ASIC), a field programmable gate array (FPGA), a digital signal processor (DSP), network processor, and/or the like. The processing device 702 may be configured to execute processing logic 726 for performing various operations, steps, and/or the like as discussed herein.

The computing hardware 700 may further include a network interface device 708. The computing hardware 700 also may include a video display unit 710 (e.g., a liquid crystal display (LCD) or a cathode ray tube (CRT)), an alphanumeric input device 712 (e.g., a keyboard), a cursor control device 714 (e.g., a mouse), and a signal generation device 716 (e.g., a speaker).

The data storage device 718 may include a non-transitory computer-accessible storage medium 730 (also known as a non-transitory computer-readable storage medium or a non-transitory computer-readable medium) on which is stored one or more modules 722 (e.g., sets of instructions) as described herein. The modules 722 may also reside, completely or at least partially, within the main memory 704 and/or within the processing device 702 during execution thereof by the computing hardware 700. In this capacity, the main memory 704 and the processing device 702 can also constitute computer-accessible storage media. The modules 722 may further be transmitted or received over one or more networks 320 via a network interface device 708.

While the computer-accessible storage medium 730 is shown in FIG. 7 to be a single medium, the term "computer-accessible storage medium" should be understood to include a single medium or multiple media (e.g., a centralized or distributed database, and/or associated caches and servers) that store the one or more sets of instructions. The term "computer-accessible storage medium" should also be understood to include any medium that is capable of storing, encoding or carrying a module (e.g., a set of instructions) for execution by the computing hardware 700 and that cause the computing hardware 700 to perform any one or more of the methodologies/functionalities of the present disclosure. The term "computer-accessible storage medium" should accordingly be understood to include, but not be limited to, solid-state memories, optical and magnetic media, etc.

### System Operation

The logical operations described herein may be implemented (1) as a sequence of computer implemented acts or one or more program modules running on a computing system and/or (2) as interconnected machine logic circuits or circuit modules within the computing system. The implementation is a matter of choice depending on the performance and other requirements of the computing system. Accordingly, the logical operations described herein are referred to variously as states, operations, steps, structural devices, acts, or modules. These states, operations, steps, structural devices, acts, and modules may be implemented in software, in firmware, in special purpose digital logic, and any combination thereof. Greater or fewer operations may be performed than shown in the figures and described herein. These operations also may be performed in a different order than those described herein.

Embodiment 1: A method comprising: retrieving, by computing hardware and via a first data movement activity defined in a first data pipeline, first iteration data for a first project defined for an organization using an agile project management digital platform, wherein: the organization represents an entity, the first project involves developing a software solution for the entity, the first project is stored as a first instance on the agile project management digital platform, the first data pipeline is configured to communicate with the first instance, and the first iteration data relates to a first iteration performed by a first team for the first project; processing, by the computing hardware via a first data transformation activity defined in the first data pipeline, the first iteration data to at least one of insert or update a first import record in an import table, wherein the first import record comprises a set of import fields comprising first import values based at least in part on the first iteration data; retrieving, by the computing hardware and via a second data movement activity defined in a second data pipeline, second iteration data for a second project defined for the organization, wherein: the second project is involved in developing the software solution for the entity, the second project is stored as a second instance on the agile project management digital platform, the second data pipeline is configured to communicate with the second instance, and the second iteration data relates to a second iteration performed by a second team for the second project; processing, by the computing hardware via a second data transformation activity defined in the second data pipeline, the second iteration data to at least one of insert or update a second import record in the import table, wherein the second import record comprises the set of import fields comprising second import values based at least in part on the second iteration data; processing, by the computing hardware, the first import values found in the set of import fields for the first import record to at least one of insert or update a first iteration record in an iteration table of a centralized data repository, wherein the first iteration record comprises a set of iteration fields comprising first iteration values based at least in part on the first import values and a data structure of the centralized data repository is configured based at least in part on an organizational framework comprising a custom construct defined by the entity for conducting agile project management methodologies in developing the software solution; and processing, by the computing hardware, the second import values found in the set of import fields for the second import record to at least one of insert or update a second iteration record in the iteration table of the centralized data repository, wherein the second iteration record comprises the set of iteration fields comprising second iteration values based at least in part on the second import values.

Embodiment 2: The method of embodiment 1, wherein the custom construct comprises an entity construct identifying a separate entity associated with at least one of the first team or the second team.

Embodiment 3: The method of embodiment 2, wherein the centralized data repository comprises a team configuration table, the team configuration table comprises a first team record for the first team that comprises a field storing a first separate entity identifier for the separate entity associated with the first team, and the team configuration table comprises a second team record for the second team that comprises the field storing a second separate entity identifier for the separate entity associated with the second team.

Embodiment 4: The method of embodiment 3, further comprising processing, by the computing hardware, the first iteration record, the first team record, the second iteration record, and the second team record to generate a comparison analysis between the separate entity associated with the first team and the separate entity associated with the second team.

Embodiment 5: The method of embodiment 1, wherein the software solution comprises a first product being developed via the first project and a second product being developed via the second project, and the custom construct comprises a solution construct used in identifying the software solution.

Embodiment 6: The method of embodiment 5, wherein the centralized data repository comprises a solution to product table and a product to project table, the solution to product table comprises a first solution to product record that comprises a first field storing a solution identifier for the software solution and a second field storing a first product identifier for the first product and a second solution to product record that comprises the first field storing the solution identifier and the second field storing a second product identifier for the second product, and the product to project table comprises a first product to project record that comprises a third field storing the first product identifier and a fourth field storing a first project identifier for the first project and a second product to project record that comprises the third field storing the second product identifier and the fourth field storing a second project identifier for the second project.

Embodiment 7: The method of embodiment 6, further comprising processing, by the computing hardware, the first iteration record, the first solution to product record, the first product to project record, the second iteration record, the second solution to product record, and the second product to project record to generate a comparison analysis between the first product being developed for the software solution via the first project and the second product being developed for the software solution via the second project.

Embodiment 8: A system comprising: a computer-readable medium storing instructions; and a processing device communicatively coupled to the computer-readable medium, wherein the processing device is configured to execute the instructions and thereby perform operations comprising: retrieving, via a first data pipeline, first iteration data for a first project defined for an organization using an agile project management digital platform, wherein: the organization represents an entity, the first project involves developing a software solution for the entity, the first project is stored as a first instance on the agile project management digital platform, the first data pipeline is configured to communicate with the first instance, and the first iteration data relates to a first iteration performed by a first team for the first project; processing the first iteration data to at least one of insert or update a first import record in an import table, wherein the first import record comprises a set of import fields comprising first import values based at least in part on the first iteration data; retrieving, via a second data pipeline, second iteration data for a second project defined for the organization, wherein: the second project is involved in developing the software solution for the entity, the second project is stored as a second instance on the agile project management digital platform, the second data pipeline is configured to communicate with the second instance, and the second iteration data relates to a second iteration performed by a second team for the second project; processing the second iteration data to at least one of insert or update a second import record in the import table, wherein the second import record comprises the set of import fields comprising second import values based at least in part on the second iteration data; processing the first import values found in the set of import fields for the first import record to at least one of insert or update a first iteration record in an iteration table of a centralized data repository, wherein the first iteration record comprises a set of iteration fields comprising first iteration values based at least in part on the first import values and a data structure of the centralized data repository is configured based at least in part on an organizational framework comprising a custom construct defined by the entity for conducting agile project management methodologies in developing the software solution; and processing the second import values found in the set of import fields for the second import record to at least one of insert or update a second iteration record in the iteration table of the centralized data repository, wherein the second iteration record comprises the set of iteration fields comprising second iteration values based at least in part on the second import values.

Embodiment 9: The system of embodiment 8, wherein the custom construct comprises an entity construct identifying a separate entity associated with at least one of the first team or the second team.

Embodiment 10: The system of embodiment 9, wherein the centralized data repository comprises a team configuration table, the team configuration table comprises a first team record for the first team that comprises a field storing a first separate entity identifier for the separate entity associated with the first team, and the team configuration table comprises a second team record for the second team that comprises the field storing a second separate entity identifier for the separate entity associated with the second team.

Embodiment 11: The system of embodiment 10, wherein the operations further comprise processing the first iteration record, the first team record, the second iteration record, and the second team record to generate a comparison analysis between the separate entity associated with the first team and the separate entity associated with the second team.

Embodiment 12: The system of embodiment 8, wherein the software solution comprises a first product being developed via the first project and a second product being developed via the second project, and the custom construct comprises a solution construct used in identifying the software solution.

Embodiment 13: The system of embodiment 12, wherein the centralized data repository comprises a solution to product table and a product to project table, the solution to product table comprises a first solution to product record that comprises a first field storing a solution identifier for the software solution and a second field storing a first product identifier for the first product and a second solution to product record that comprises the first field storing the solution identifier and the second field storing a second product identifier for the second product, and the product to project table comprises a first product to project record that comprises a third field storing the first product identifier and a fourth field storing a first project identifier for the first project and a second product to project record that comprises the third field storing the second product identifier and the fourth field storing a second project identifier for the second project.

Embodiment 14: The system of embodiment 13, wherein the operations further comprise processing the first iteration record, the first solution to product record, the first product to project record, the second iteration record, the second solution to product record, and the second product to project record to generate a comparison analysis between the first product being developed for the software solution via the first project and the second product being developed for the software solution via the second project.

Embodiment 15: A computer-readable medium storing computer-executable instructions that, when executed by computing hardware, configure the computing hardware to perform operations comprising: retrieving, via a first data pipeline, first iteration data for a first project defined for an organization using an agile project management digital platform, wherein: the organization represents an entity, the first project involves developing a software solution for the entity, the first project is stored as a first instance on the agile project management digital platform, the first data pipeline is configured to communicate with the first instance, and the first iteration data relates to a first iteration performed by a first team for the first project; processing the first iteration data to at least one of insert or update a first import record in an import table, wherein the first import record comprises a set of import fields comprising first import values based at least in part on the first iteration data; retrieving, via a second data pipeline, second iteration data for a second project defined for the organization, wherein: the second project is involved in developing the software solution for the entity, the second project is stored as a second instance on the agile project management digital platform, the second data pipeline is configured to communicate with the second instance, and the second iteration data relates to a second iteration performed by a second team for the second project; processing the second iteration data to at least one of insert or update a second import record in the import table, wherein the second import record comprises the set of import fields comprising second import values based at least in part on the second iteration data; processing the first import values found in the set of import fields for the first import record to at least one of insert or update a first iteration record in an iteration table of a centralized data repository, wherein the first iteration record comprises a set of iteration fields comprising first iteration values based at least in part on the first import values and a data structure of the centralized data repository is configured based at least in part on an organizational framework comprising a custom construct defined by the entity for conducting agile project management methodologies in developing the software solution; and processing the second import values found in the set of import fields for the second import record to at least one of insert or update a second iteration record in the iteration table of the centralized data repository, wherein the second iteration record comprises the set of iteration fields comprising second iteration values based at least in part on the second import values.

Embodiment 16: The computer-readable medium of embodiment 15, wherein the custom construct comprises an entity construct identifying a separate entity associated with at least one of the first team or the second team.

Embodiment 17: The computer-readable medium of embodiment 16, wherein the data structure comprises a team configuration table, the team configuration table comprises a first team record for the first team that comprises a field storing a first separate entity identifier for the separate entity associated with the first team, and the team configuration table comprises a second team record for the second team that comprises the field storing a second separate entity identifier for the separate entity associated with the second team.

Embodiment 18: The computer-readable medium of embodiment 17, wherein the operations further comprise processing the first iteration record, the first team record, the second iteration record, and the second team record to generate a comparison analysis between the separate entity associated with the first team and the separate entity associated with the second team.

Embodiment 19: The computer-readable medium of embodiment 15, wherein the software solution comprises a first product being developed via the first project and a second product being developed via the second project, and the custom construct comprises a solution construct used in identifying the software solution.

Embodiment 20: The computer-readable medium of embodiment 19, wherein the centralized data repository comprises a solution to product table and a product to project table, the solution to product table comprises a first solution to product record that comprises a first field storing a solution identifier for the software solution and a second field storing a first product identifier for the first product and a second solution to product record that comprises the first field storing the solution identifier and the second field storing a second product identifier for the second product, and the product to project table comprises a first product to project record that comprises a third field storing the first product identifier and a fourth field storing a first project identifier for the first project and a second product to project record that comprises the third field storing the second product identifier and the fourth field storing a second project identifier for the second project.

Embodiment 21: The computer-readable medium of embodiment 20, wherein the operations further comprise processing the first iteration record, the first solution to product record, the first product to project record, the second iteration record, the second solution to product record, and the second product to project record to generate a comparison analysis between the first product being developed for the software solution via the first project and the second product being developed for the software solution via the second project.

### CONCLUSION

While this specification contains many specific aspect details, these should not be construed as limitations on the scope of any invention or of what may be claimed, but rather as descriptions of features that may be specific to particular embodiments of particular inventions. Certain features that are described in this specification in the context of separate embodiments also may be implemented in combination in a single embodiment. Conversely, various features that are described in the context of a single embodiment also may be implemented in multiple embodiments separately or in any suitable sub-combination. Moreover, although features may be described above as acting in certain combinations and even initially claimed as such, one or more features from a claimed combination may in some cases be excised from the combination, and the claimed combination may be a sub-combination or variation of a sub-combination.

Similarly, while operations are described in a particular order, this should not be understood as requiring that such operations be performed in the particular order described or in sequential order, or that all described operations be performed, to achieve desirable results. In certain circumstances, multitasking and parallel processing may be advantageous. Moreover, the separation of various components in the various embodiments described above should not be understood as requiring such separation in all embodiments, and the described program components (e.g., modules) and systems may be integrated together in a single software product or packaged into multiple software products.

Many modifications and other embodiments of the disclosure will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for the purposes of limitation.

In some embodiments, this disclosure may include the language "at least one of [element A] or [element B]." This language may refer to one or more of the elements. For example, "at least one of A or B" may refer to "A," "B," or "A and B." In other words, "at least one of A or B" may refer to "at least one of A and at least one of B," "at least A or B," or "A and B." In some embodiments, this disclosure may include the language, for example "[element A], [element B], and/or [element C]." This language may refer to either of the element or any combination thereof. In other words, "A, B, and/or C" may refer to "A," "B," "C," "A and B," "A and C," "B and C," or "A, B, and C."

The subject matter of this disclosure has been described in relation to particular embodiments, which are intended in all respects to be illustrative rather than restrictive. Alternative embodiments will become apparent to those of ordinary skill in the art to which the present subject matter pertains without departing from the scope hereof. Different combinations of elements, as well as use of elements not shown, are also possible and contemplated.

## Claims

1. A method comprising:
retrieving, by computing hardware and via a first data movement activity defined in a first data pipeline, first iteration data for a first project (211, 212, 213, 214) defined for an organization using an agile project management digital platform, wherein:
the organization represents an entity (111),
the first project (211, 212, 213, 214) involves developing a software solution (112) for the entity (111),
the first project (211, 212, 213, 214) is stored as a first instance (310) on the agile project management digital platform,
the first data pipeline is configured to communicate with the first instance (310), and
the first iteration data relates to a first iteration performed by a first team (122, 124, 125, 127, 128, 132, 134, 135) for the first project (211, 212, 213, 214);
processing, by the computing hardware via a first data transformation activity defined in the first data pipeline, the first iteration data to at least one of insert or update a first import record in an import table (530), wherein the first import record comprises a set of import fields comprising first import values based at least in part on the first iteration data;
retrieving, by the computing hardware and via a second data movement activity defined in a second data pipeline, second iteration data for a second project (211, 212, 213, 214) defined for the organization, wherein:
the second project (211, 212, 213, 214) is involved in developing the software solution (112) for the entity (111),
the second project (211, 212, 213, 214) is stored as a second instance (310) on the agile project management digital platform,
the second data pipeline is configured to communicate with the second instance (310), and
the second iteration data relates to a second iteration performed by a second team (122, 124, 125, 127, 128, 132, 134, 135) for the second project (211, 212, 213, 214);
processing, by the computing hardware via a second data transformation activity defined in the second data pipeline, the second iteration data to at least one of insert or update a second import record in the import table (530), wherein the second import record comprises the set of import fields comprising second import values based at least in part on the second iteration data;
processing, by the computing hardware, the first import values found in the set of import fields for the first import record to at least one of insert or update a first iteration record in an iteration table (570) of a centralized data repository (300), wherein the first iteration record comprises a set of iteration fields comprising first iteration values based at least in part on the first import values and a data structure of the centralized data repository (300) is configured based at least in part on an organizational framework comprising a custom construct defined by the entity for conducting agile project management methodologies in developing the software solution (112); and
processing, by the computing hardware, the second import values found in the set of import fields for the second import record to at least one of insert or update a second iteration record in the iteration table (570) of the centralized data repository (300), wherein the second iteration record comprises the set of iteration fields comprising second iteration values based at least in part on the second import values.

2. The method of claim 1, wherein the custom construct comprises an entity construct identifying a separate entity associated with at least one of the first team (122, 124, 125, 127, 128, 132, 134, 135) or the second team (122, 124, 125, 127, 128, 132, 134, 135), the centralized data repository (300) comprises a team configuration table (595), the team configuration table (595) comprises a first team record for the first team (122, 124, 125, 127, 128, 132, 134, 135) that comprises a field storing a first separate entity identifier for the separate entity associated with the first team (122, 124, 125, 127, 128, 132, 134, 135), and the team configuration table (595) comprises a second team record for the second team (122, 124, 125, 127, 128, 132, 134, 135) that comprises the field storing a second separate entity identifier for the separate entity associated with the second team (122, 124, 125, 127, 128, 132, 134, 135).

3. The method of claim 2, further comprising processing, by the computing hardware, the first iteration record, the first team record, the second iteration record, and the second team record to generate a comparison analysis between the separate entity associated with the first team (122, 124, 125, 127, 128, 132, 134, 135) and the separate entity associated with the second team (122, 124, 125, 127, 128, 132, 134, 135).

4. The method of any of claims 1 to 3, wherein the software solution (112) comprises a first product (120, 130) being developed via the first project (211, 212, 213, 214) and a second product (120, 130) being developed via the second project (211, 212, 213, 214), and the custom construct comprises a solution construct used in identifying the software solution (112).

5. The method of claim 4, wherein the centralized data repository (300) comprises a solution to product table (550) and a product to project table (560), the solution to product table (550) comprises a first solution to product record that comprises a first field (511) storing a solution identifier for the software solution (112) and a second field (541) storing a first product identifier for the first product (120, 130) and a second solution to product record that comprises the first field (511) storing the solution identifier and the second field (541) storing a second product identifier for the second product (120, 130), and the product to project table (560) comprises a first product to project record that comprises a third field (541) storing the first product identifier and a fourth field (521) storing a first project identifier for the first project (211, 212, 213, 214) and a second product to project record that comprises the third field (541) storing the second product identifier and the fourth field (521) storing a second project identifier for the second project (211, 212, 213, 214).

6. A system comprising:
a computer-readable medium storing instructions; and
a processing device communicatively coupled to the computer-readable medium, wherein the processing device is configured to execute the instructions and thereby perform operations comprising:
retrieving, via a first data pipeline, first iteration data for a first project (211, 212, 213, 214) defined for an organization using an agile project management digital platform, wherein:
the organization represents an entity (111),
the first project (211, 212, 213, 214) involves developing a software solution (112) for the entity (111),
the first project (211, 212, 213, 214) is stored as a first instance (310) on the agile project management digital platform,
the first data pipeline is configured to communicate with the first instance (310), and
the first iteration data relates to a first iteration performed by a first team (122, 124, 125, 127, 128, 132, 134, 135) for the first project (211, 212, 213, 214);
processing the first iteration data to at least one of insert or update a first import record in an import table (530), wherein the first import record comprises a set of import fields comprising first import values based at least in part on the first iteration data;
retrieving, via a second data pipeline, second iteration data for a second project (211, 212, 213, 214) defined for the organization, wherein:
the second project (211, 212, 213, 214) is involved in developing the software solution (112) for the entity (111),
the second project (211. 212. 213. 214) is stored as a second instance (310) on the agile project management digital platform,
the second data pipeline is configured to communicate with the second instance (310), and
the second iteration data relates to a second iteration performed by a second team (122, 124, 125, 127, 128, 132, 134, 135) for the second project (211, 212, 213, 214);
processing the second iteration data to at least one of insert or update a second import record in the import table (530), wherein the second import record comprises the set of import fields comprising second import values based at least in part on the second iteration data;
processing the first import values found in the set of import fields for the first import record to at least one of insert or update a first iteration record in an iteration table (570) of a centralized data repository (300), wherein the first iteration record comprises a set of iteration fields comprising first iteration values based at least in part on the first import values and a data structure of the centralized data repository (300) is configured based at least in part on an organizational framework comprising a custom construct defined by the entity (111) for conducting agile project management methodologies in developing the software solution (112); and
processing the second import values found in the set of import fields for the second import record to at least one of insert or update a second iteration record in the iteration table (570) of the centralized data repository (300), wherein the second iteration record comprises the set of iteration fields comprising second iteration values based at least in part on the second import values.

7. The system of claim 6, wherein the custom construct comprises an entity construct identifying a separate entity associated with at least one of the first team (122, 124, 125, 127, 128, 132, 134, 135) or the second team (122, 124, 125, 127, 128, 132, 134, 135), the centralized data repository (300) comprises a team configuration table (595), the team configuration table (595) comprises a first team record for the first team (122, 124, 125, 127, 128, 132, 134, 135) that comprises a field storing a first separate entity identifier for the separate entity associated with the first team (122, 124, 125, 127, 128, 132, 134, 135), and the team configuration table (595) comprises a second team record for the second team (122, 124, 125, 127, 128, 132, 134, 135) that comprises the field storing a second separate entity identifier for the separate entity associated with the second team (122, 124, 125, 127, 128, 132, 134, 135).

8. The system of claim 6 or 7, wherein the software solution (112) comprises a first product (120, 130) being developed via the first project (211, 212, 213, 214) and a second product (120, 130) being developed via the second project (211, 212, 213, 214), and the custom construct comprises a solution construct used in identifying the software solution (112).

9. The system of claim 8, wherein the centralized data repository (300 comprises a solution to product table (550) and a product to project table (560), the solution to product table (550) comprises a first solution to product record that comprises a first field (511) storing a solution identifier for the software solution (112) and a second field (541) storing a first product identifier for the first product (211, 212, 213, 214) and a second solution to product record that comprises the first field (511) storing the solution identifier and the second field (541) storing a second product identifier for the second product (211, 212, 213, 214), and the product to project table (560) comprises a first product to project record that comprises a third field (541) storing the first product identifier and a fourth field (521) storing a first project identifier for the first project (211, 212, 213, 214) and a second product to project record that comprises the third field (541) storing the second product identifier and the fourth field (521) storing a second project identifier for the second project (211, 212, 213, 214).

10. The system of claim 9, wherein the operations further comprise processing the first iteration record, the first solution to product record, the first product to project record, the second iteration record, the second solution to product record, and the second product to project record to generate a comparison analysis between the first product (120, 130) being developed for the software solution (112) via the first project (211, 212, 213, 214) and the second product (120, 130) being developed for the software solution (112) via the second project (211, 212, 213, 214).

11. A computer-readable medium storing computer-executable instructions that, when executed by computing hardware, configure the computing hardware to perform operations comprising:
retrieving, via a first data pipeline, first iteration data for a first project (211, 212, 213, 214) defined for an organization using an agile project management digital platform, wherein:
the organization represents an entity (111),
the first project (211, 212, 213, 214) involves developing a software solution (112) for the entity (111),
the first project (211, 212, 213, 214) is stored as a first instance (310) on the agile project management digital platform,
the first data pipeline is configured to communicate with the first instance (310), and
the first iteration data relates to a first iteration performed by a first team (122, 124, 125, 127, 128, 132, 134, 135) for the first project (211, 212, 213, 214);
processing the first iteration data to at least one of insert or update a first import record in an import table (530), wherein the first import record comprises a set of import fields comprising first import values based at least in part on the first iteration data;
retrieving, via a second data pipeline, second iteration data for a second project (211, 212, 213, 214) defined for the organization, wherein:
the second project (211, 212, 213, 214) is involved in developing the software solution (112) for the entity (111),
the second project (211, 212, 213, 214) is stored as a second instance (310) on the agile project management digital platform,
the second data pipeline is configured to communicate with the second instance (310), and
the second iteration data relates to a second iteration performed by a second team (122, 124, 125, 127, 128, 132, 134, 135) for the second project (211, 212,213, 214);
processing the second iteration data to at least one of insert or update a second import record in the import table (530), wherein the second import record comprises the set of import fields comprising second import values based at least in part on the second iteration data;
processing the first import values found in the set of import fields for the first import record to at least one of insert or update a first iteration record in an iteration table (570) of a centralized data repository (300), wherein the first iteration record comprises a set of iteration fields comprising first iteration values based at least in part on the first import values and a data structure of the centralized data repository (300) is configured based at least in part on an organizational framework comprising a custom construct defined by the entity for conducting agile project management methodologies in developing the software solution (112); and
processing the second import values found in the set of import fields for the second import record to at least one of insert or update a second iteration record in the iteration table (570) of the centralized data repository (300), wherein the second iteration record comprises the set of iteration fields comprising second iteration values based at least in part on the second import values.

12. The computer-readable medium of claim 11, wherein the custom construct comprises an entity construct identifying a separate entity associated with at least one of the first team (122, 124, 125, 127, 128, 132, 134, 135) or the second team (122, 124, 125, 127, 128, 132, 134, 135), the data structure comprises a team configuration table (595), the team configuration table (595) comprises a first team record for the first team (122, 124, 125, 127, 128, 132, 134, 135) that comprises a field storing a first separate entity identifier for the separate entity associated with the first team (122, 124, 125, 127, 128, 132, 134, 135), and the team configuration table (595) comprises a second team record for the second team (122, 124, 125, 127, 128, 132, 134, 135) that comprises the field storing a second separate entity identifier for the separate entity associated with the second team (122, 124, 125, 127, 128, 132, 134, 135).

13. The computer-readable medium of claim 12, wherein the operations further comprise processing the first iteration record, the first team record, the second iteration record, and the second team record to generate a comparison analysis between the separate entity associated with the first team (122, 124, 125, 127, 128, 132, 134, 135) and the separate entity associated with the second team (122, 124, 125, 127, 128, 132, 134, 135).

14. The computer-readable medium of any of claims 11 to 13, wherein the software solution (112) comprises a first product (120, 130) being developed via the first project (211, 212, 213,214) and a second product (120, 130) being developed via the second project (211, 212, 213, 214), and the custom construct comprises a solution construct used in identifying the software solution (112).

15. The computer-readable medium of claim 14, wherein the centralized data repository (300) comprises a solution to product table (550) and a product to project table (560), the solution to product table (550) comprises a first solution to product record that comprises a first field (511) storing a solution identifier for the software solution (112) and a second field (541) storing a first product identifier for the first product (120, 130) and a second solution to product record that comprises the first field (511) storing the solution identifier and the second field (541) storing a second product identifier for the second product (120, 130), and the product to project table (560) comprises a first product to project record that comprises a third field (541) storing the first product identifier and a fourth field (521) storing a first project identifier for the first project (211, 212, 213, 214) and a second product to project record that comprises the third field (541) storing the second product identifier and the fourth field (521) storing a second project identifier for the second project (211, 212, 213, 214), and the operations further comprise processing the first iteration record, the first solution to product record, the first product to project record, the second iteration record, the second solution to product record, and the second product to project record to generate a comparison analysis between the first product (120, 130) being developed for the software solution (112) via the first project (211, 212, 213, 214) and the second product (120, 130) being developed for the software solution (112) via the second project (211, 212, 213, 214).
